(19) Europäisches Patentamt / European Patent Office / Office européen des brevets

(11) **EP 4 226 231 B1**

(12) **EUROPÄISCHE PATENTSCHRIFT**

(45) Veröffentlichungstag und Bekanntmachung des Hinweises auf die Patenterteilung:
**11.12.2024   Patentblatt 2024/50**

(21) Anmeldenummer: **21791244.3**

(22) Anmeldetag: **05.10.2021**

(51) Internationale Patentklassifikation (IPC):
*G05D 23/13* *(2006.01)*

(52) Gemeinsame Patentklassifikation (CPC):
**G05D 23/1393; B01F 23/453; B01F 25/23;
B01F 25/432; B01F 25/4523; B01F 33/811;
B01F 33/821; B01F 35/2215; G01M 15/02;
G01M 17/00; G01M 99/002**

(86) Internationale Anmeldenummer:
**PCT/AT2021/060359**

(87) Internationale Veröffentlichungsnummer:
**WO 2022/073049 (14.04.2022 Gazette 2022/15)**

(54) **KONDITIONIERSYSTEM FÜR EINEN PRÜFSTAND**

CONDITIONING SYSTEM FOR A TESTBED

SYSTÈME DE CONDITIONNEMENT POUR UN BANC D'ESSAI

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **06.10.2020   AT 508522020**

(43) Veröffentlichungstag der Anmeldung:
**16.08.2023   Patentblatt 2023/33**

(73) Patentinhaber: **AVL List GmbH
8020 Graz (AT)**

(72) Erfinder:
  • **RATH, Wolfgang
    7551 Bocksdorf (AT)**
  • **BURAZER, Vedran
    8045 Graz (AT)**

(74) Vertreter: **Patentanwälte Pinter & Weiss OG
Prinz-Eugen-Straße 70
1040 Wien (AT)**

(56) Entgegenhaltungen:
WO-A1-2019/149792       WO-A1-2019/183658
DE-A1- 102009 013 449    US-A1- 2019 091 641

**Beschreibung**

Die Erfindung betrifft eine Mischungseinheit für ein Konditioniersystem eines Prüfstands, zur Konditionierung eines Betriebsmediums eines Prüflingskreislaufs eines am Prüfstand aufgebauten Prüflings auf eine vorgegebene Soll-Temperatur sowie eine Konditioniereinheit für ein Konditioniersystem eines Prüfstands zur Konditionierung eines Betriebsmediums eines Prüflingskreislaufs eines am Prüfstand aufgebauten Prüflings auf eine vorgegebene Soll-Temperatur. Weiters betrifft die Erfindung ein Konditioniersystem für einen Prüfstand zur Konditionierung eines Betriebsmediums eines Prüflingskreislaufs eines am Prüfstand aufgebauten Prüflings auf eine vorgegebene Soll-Temperatur und einen Prüfstand mit einem Prüfling und mit einem Konditioniersystem zur Konditionierung eines Betriebsmediums eines Prüflingskreislaufs des Prüflings auf eine vorgegebene Soll-Temperatur. Zudem betrifft die Erfindung ein Verfahren zum Konditionieren eines Betriebsmediums eines Prüflingskreislaufs eines Prüflings auf einem Prüfstand auf eine vorgegebene Soll-Temperatur.

Auf Prüfständen können für bestimmte Prüfversuche bekannterweise Konditioniersysteme verwendet werden, um bestimmte flüssige oder gasförmige Betriebsmedien eines aufgebauten Prüflings auf eine gewünschte Temperatur zu konditionieren. Beispielsweise werden als Prüflinge ganze Fahrzeuge, Teilsysteme von Fahrzeugen oder einzelne Komponenten von Fahrzeugen geprüft. Ein Teilsystem eines Fahrzeugs ist z.B. ein Antriebsstrang, der eine oder mehrere Komponenten, wie Antriebsaggregate, Getriebe, usw., umfassen kann. Eine Komponente kann beispielsweise ein Antriebsaggregat wie z.B. ein Verbrennungsmotor, Elektromotoren, Kombinationen von Verbrennungsmotoren und Elektromotoren (sogenannte Hybridantriebe) sein. Komponenten können aber beispielsweise auch Brennstoffzellen, Batterien, Getriebe usw. sein. Jeder Prüfling weist üblicherweise zumindest einen Prüflingskreislauf für ein Betriebsmedium auf, wie z.B. ein Kühlmittel, Kraftstoff, Schmieröl, etc. Während des Betriebs des Prüflings am Prüfstand zirkuliert das Betriebsmedium im Prüflingskreislauf, wobei üblicherweise ein Wärmeeintrag in das Betriebsmedium erfolgt. Oftmals ist es dabei gewünscht, bestimmte zeitliche Temperaturverläufe des Betriebsmediums im Prüflingskreislauf am Prüfstand möglichst genau und möglichst rasch einzustellen. Beispielsweise kann es gewünscht sein, einen zuvor unter realen Bedingungen (beispielsweise in einem realen Fahrzeug bei einer Fahrt auf einer bestimmten Strecke) aufgezeichneten Temperaturverlauf eines Betriebsmediums des Prüflings am Prüfstand nachzubilden oder auch einen zeitgleich simulierten Temperaturverlauf. Es kann auch gewünscht sein, die Temperatur auf einem möglichst konstanten Niveau zu halten. Insbesondere rasche Temperaturänderungen des Betriebsmediums am Prüfstand durch ein Konditioniersystem können bisher aber nur unzureichend eingeregelt werden, was im Wesentlichen an der relativ hohen thermischen Trägheit der verwendeten Betriebsmedien liegt.

Konditioniersysteme und Komponenten von Konditioniersystemen sind beispielsweise aus WO 2019/183658 A1, WO 2019/149792 A1, EP 3 293 504 A1, DE 10 2009 013449 A1 oder aus US 2019/091641 A1 bekannt.

Es ist daher die Aufgabe der Erfindung, eine Vorrichtung und ein Verfahren bereitzustellen, die es ermöglichen, ein Betriebsmedium in einem Prüflingskreislauf eines Prüflings auf einem Prüfstand möglichst rasch auf eine gewünschte Temperatur zu konditionieren.

Erfindungsgemäß wird die Aufgabe mit einer Konditioniereinheit dadurch gelöst, dass an der Konditioniereinheit zumindest ein Mischungseinheits-Zulaufanschluss und zumindest ein Mischungseinheits-Ablaufanschluss, zur Verbindung der Konditioniereinheit mit einer in den Prüflingskreislauf fluidisch integrierbaren Mischungseinheit vorgesehen sind, wobei der zumindest eine Mischungseinheits-Zulaufanschluss und der zumindest eine Mischungseinheits-Ablaufanschluss innerhalb der Konditioniereinheit fluidisch verbunden sind, um einen Teil eines Konditionierkreislaufs für das Betriebsmedium auszubilden, wobei sich eine mit dem zumindest einen Mischungseinheits-Zulaufanschluss verbundene Hauptstromleitung des Konditionierkreislaufs in der Konditioniereinheit in zumindest zwei Teilstromleitungen aufteilt, wobei jede Teilstromleitung mit dem zumindest einen Mischungseinheits-Ablaufanschluss verbunden ist, wobei das Betriebsmedium in einer Teilstromleitung auf eine vorgegebene Konditionierungs-Temperatur konditionierbar ist und die zumindest eine weitere Teilstromleitung von unkonditioniertem Betriebsmedium mit einer relativ zur Konditionierungs-Temperatur höheren oder niedrigeren Neutral-Temperatur durchströmbar ist, wobei ein Durchfluss des Betriebsmediums in den zumindest zwei Teilstromleitungen in Abhängigkeit der vorgegebenen Soll-Temperatur im Prüflingskreislauf einstellbar ist. Durch Einstellen des Durchflusses kann in Abhängigkeit der vorgegebenen Soll-Temperatur ein bestimmtes Mischungsverhältnis von Betriebsmedium aus den zumindest zwei Teilstromleitungen erzeugt werden, sodass die Soll-Temperatur möglichst rasch erreicht werden kann.

Vorteilhafte Ausgestaltungen der Konditioniereinheit sind in den abhängigen Ansprüchen 2 bis 11 angegeben.

Weiters wird die Aufgabe mit einem Verfahren dadurch gelöst, dass eine Mischungseinheit in den Prüflingskreislauf fluidisch integriert wird, um einen Teil des Prüflingskreislaufs auszubilden, wobei zu konditionierendes Betriebsmedium des Prüflingskreislaufs der Mischungseinheit über zumindest einen Prüflingskreis-Zulaufanschluss zugeführt wird und auf die vorgegebene Soll-Temperatur konditioniertes Betriebsmedium über zumindest einen Prüflingskreis-Ablaufanschluss von der Mischungseinheit abgeführt wird, wobei der Mischungseinheit über zumindest einen Konditioniereinheits-Zulaufanschluss zumindest Betriebsmedium mit einer vorgegebenen Konditionierungs-Temperatur und Betriebsmedium mit einer relativ dazu höheren oder niedrigeren Neutral-Temperatur zugeführt wird, das in einem innerhalb der Mischungseinheit vorgesehenen Mischbereich mit dem zugeführten Betriebsmedium des Prüflingskreislaufs gemischt wird und über zumindest einen Konditioniereinheits-Rücklaufanschluss von der Mischungseinheit abgeführt wird, wobei ein Durchfluss des Betriebsmediums mit der Konditionierungs-Temperatur und ein Durchfluss des Betriebsmediums mit der Neutral-Temperatur in Abhängigkeit der vorgegebenen Soll-Temperatur eingestellt wird.

Vorteilhafte Ausgestaltungen des Verfahrens sind in den abhängigen Ansprüchen 13 bis 16 angegeben.

In vorteilhafter Weise kann die Aufgabe weiters mit einer Mischungseinheit dadurch gelöst werden, dass in der Mischungseinheit ein Mischbereich vorgesehen ist, in dem Betriebsmedium des Prüflingskreislaufs mit vorkonditioniertem Betriebsmedium aus einem Konditionierkreislauf mischbar ist, um das Betriebsmedium im Prüflingskreislauf auf die vorgegebene Soll-Temperatur zu konditionieren, wobei an der Mischungseinheit zur fluidischen Integration der Mischungseinheit in den Prüflingskreislauf zumindest ein Prüflingskreis-Zulaufanschluss und zumindest einen Prüflingskreis-Ablaufanschluss vorgesehen sind, die über den Mischbereich fluidisch miteinander verbunden sind, um einen Teil des Prüflingskreislaufs auszubilden, wobei an der Mischungseinheit zur Verbindung der Mischungseinheit mit einer Konditioniereinheit des Konditioniersystems zumindest ein Konditioniereinheits-Zulaufanschluss und zumindest ein Konditioniereinheits-Rücklaufanschluss vorgesehen sind, die über den Mischbereich fluidisch miteinander verbunden sind, um einen Teil des Konditionierkreislaufs für das Betriebsmedium auszubilden. Dadurch kann ein sehr homogenes Gemisch erzeugt werden und ein Druckverlust im Prüflingskreislauf möglichst geringgehalten werden.

Die gegenständliche Erfindung wird nachfolgend unter Bezugnahme auf die Figuren 1a bis 7 näher erläutert, die beispielhaft, schematisch und nicht einschränkend vorteilhafte Ausgestaltungen der Erfindung zeigen. Dabei zeigt

Fig.1a ein Konditioniersystem der Erfindung in einer vorteilhaften Ausgestaltung,

Fig.1b ein Konditioniersystem der Erfindung in einer alternativen Ausgestaltung

Fig.2 eine Mischungseinheit in einer vorteilhaften Ausgestaltung,

Fig.3 einen Strömungsverlauf in der Mischkammer der Mischungseinheit,

Fig.4 eine Mischungseinheit in einer alternativen Ausgestaltung und

Fig.5 eine Ventileinheit in einer vorteilhaften Ausgestaltung,

Fig.6 eine Schnittdarstellung eines Ventilgehäuses der Ventileinheit und

Fig.7 ein Mischelement der Ventileinheit.

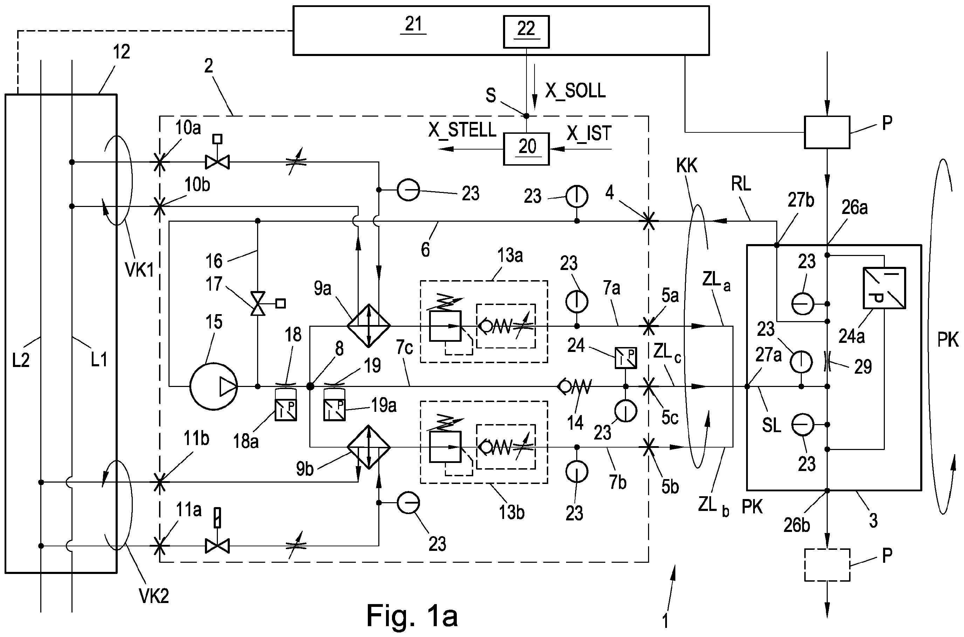

Fig.1a zeigt eine schematische Darstellung eines erfindungsgemäßes Konditioniersystems 1 auf einem Prüfstand in einer vorteilhaften Ausführungsform. Das Konditioniersystem 1 weist eine Konditioniereinheit 2 und eine Mischungseinheit 3 auf, die fluidisch miteinander verbunden sind, um einen Konditionierkreislauf KK für ein fluides Betriebsmedium auszubilden. Unter einem fluiden Betriebsmedium ist hierbei ein geeignetes gasförmiges oder flüssiges Medium zu verstehen. Beispielsweise kann als Betriebsmedium ein Kühlmittel, ein Kraftstoff, ein Öl, Luft, etc. vorgesehen sein. Unter "fluidisch verbunden" ist im Rahmen der Erfindung eine strömungsmechanische Verbindung zu verstehen, beispielsweise über geeignete Rohre, Leitungen, etc. Die Mischungseinheit 3 kann in einen Prüflingskreislauf PK eines auf einem Prüfstand aufgebauten Prüflings P fluidisch integriert werden, in welchem dasselbe Betriebsmedium zirkuliert. Die Art des verwendeten Betriebsmediums im Konditionierkreislauf KK hängt dabei vom verwendeten Betriebsmedium im Prüflingskreislauf PK des Prüflings P ab. Wie eingangs erwähnt, kann als Prüfling P beispielsweise ein Getriebe wie z.B. ein Schaltgetriebe, Automatikgetriebe oder ein Achsgetriebe vorgesehen sein, ein Antriebsaggregat wie z.B. ein Verbrennungsmotor, Elektromotor, ein Hybridantrieb, ein Energiespeicher wie z.B. eine Batterie oder ein Energiewandler wie z.B. eine Brennstoffzelle, etc. Für die Erfindung ist es aber unerheblich, welche Art von Prüfling P verwendet wird. Grundsätzlich kann jeder Prüfling P mit einem Prüflingskreislauf PK mit Betriebsmedium verwendet werden. Bei mehreren Betriebsmedien des Prüflings können am Prüfstand natürlich auch mehrere solcher erfindungsgemäßen Konditioniersysteme 1 vorgesehen sein. Um den Prüfling P am Prüfstand entsprechend eines Prüfversuchs zu steuern, ist in bekannter Weise in der Regel eine Prüfstandssteuerungseinheit 21 vorgesehen.

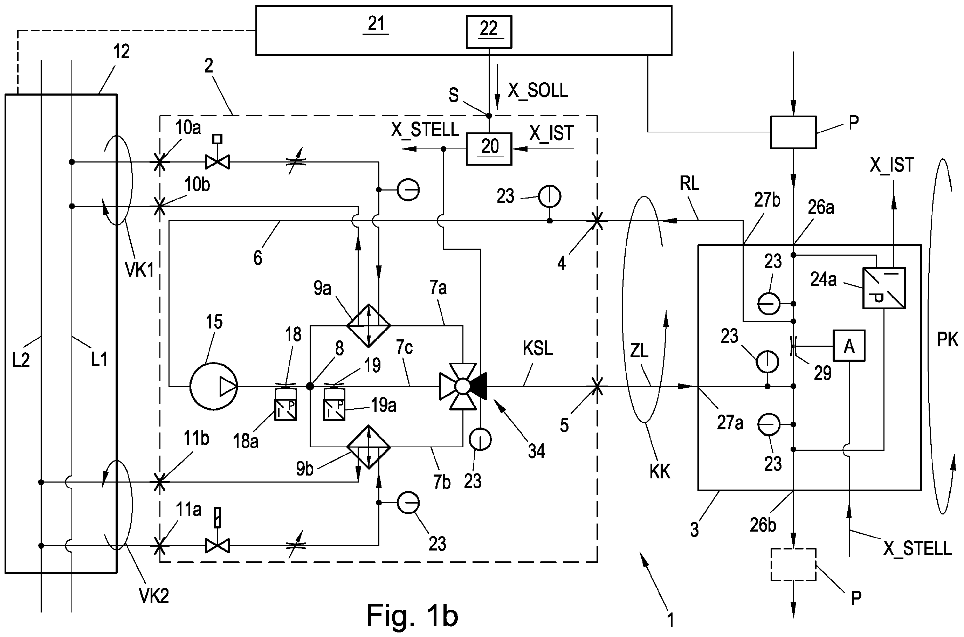

Im Prüflingskreislauf PK kann natürlich auch eine (nicht dargestellte) Pumpe zur Förderung des Betriebsmediums vorgesehen sein, die Teil des Prüfstands oder auch Teil des Prüflings P sein kann. Natürlich können auch weitere Komponenten, wie z.B. Wärmetauscher, Ventile, Sensoren, Drosseln, etc. im Prüflingskreislauf PK vorgesehen sein, die jedoch für die Erfindung unerheblich sind. Die Mischungseinheit 3 kann, so wie in Fig.1 dargestellt, in Strömungsrichtung des Betriebsmediums nach dem Prüfling P im Prüflingskreislauf PK integriert werden. Die Mischungseinheit 3 kann aber auch in Strömungsrichtung des Betriebsmediums vor dem Prüfling P vorgesehen sein, wie in Fig.1 durch den gestrichelten Prüfling P angedeutet ist.

Das Temperaturverhalten des Betriebsmediums soll am Prüfstand mit Hilfe des Konditioniersystems 1 nachgebildet werden. Insbesondere soll mit dem Konditioniersystem 1 gemäß der Erfindung der Wärmeeintrag des Prüflings P in den Prüflingskreislauf PK nachgebildet werden, der sich aus dem Betrieb des Prüflings P ergibt. Der Prüfling P kann dazu am Prüfstand tatsächlich bestimmungsgemäß betrieben werden, sodass er selbst Arbeit verrichtet, durch die das Betriebsmedium im Prüflingskreislauf PK erwärmt wird. Das Konditioniersystem 1 könnte dabei beispielsweise genutzt werden, um einen höheren oder geringeren Wärmeeintrag des Prüflings P zu simulieren. Der Prüfling P kann aber auch lediglich dazu genutzt werden, um den durch den Prüfling P verursachten Druckverlust im Prüflingskreislauf PK möglichst realitätsnah abbilden zu können. Der Prüfling P wird in diesem Fall nicht selbst betrieben, verursacht also keinen Wärmeeintrag in das Betriebsmedium des Prüflingskreislaufs PK, sondern sein Wärmeeintrag wird durch das erfindungsgemäße Konditioniersystem 1 emuliert.

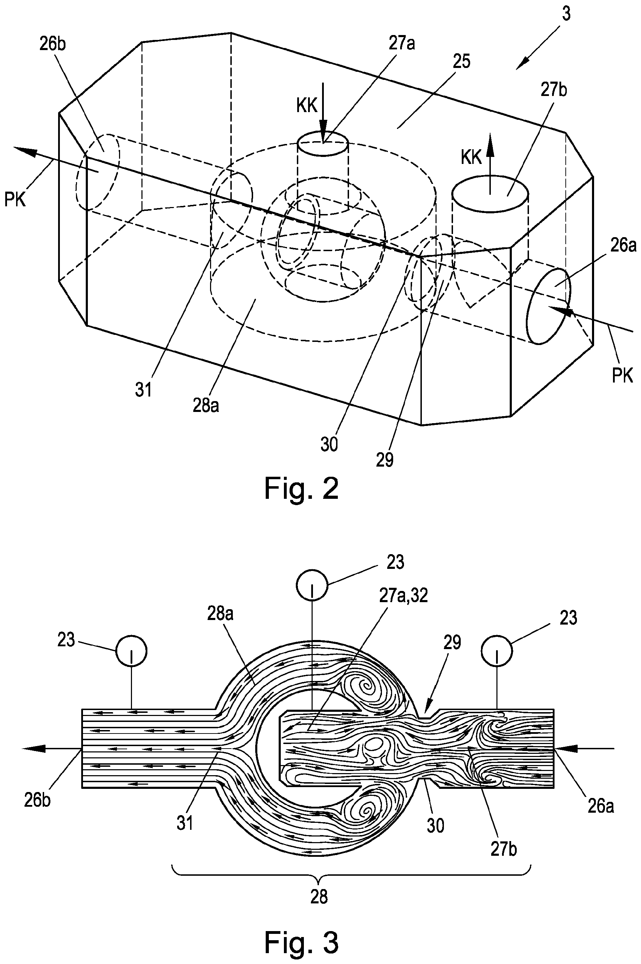

Dazu werden vorkonditioniertes Betriebsmedium aus dem Konditionierkreislauf KK und das Betriebsmedium des Prüflingskreislaufs PK in der Mischungseinheit 3 derart gemischt, dass eine vorgegebene Soll-Temperatur T_SOLL des Betriebsmediums im Prüflingskreislauf PK stromabwärts der Mischeinheit 3 eingestellt wird. Die Vorkonditionierung des Betriebsmediums im Konditionierkreislauf KK wird von der Konditioniereinheit 2 durchgeführt, wie nachfolgend näher erläutert wird. Vorteilhafte Ausgestaltungen der Mischungseinheit 3 werden anhand Fig.2 + Fig.3 sowie Fig.4 noch näher beschrieben.

Allgemein sind an der Konditioniereinheit 2 zumindest ein Mischungseinheits-Zulaufanschluss 4 und zumindest ein Mischungseinheits-Ablaufanschluss 5 zur Verbindung der Konditioniereinheit 2 mit der Mischungseinheit 3 vorgesehen. Im dargestellten Beispiel gemäß Fig.1a sind beispielsweise drei Mischungseinheits-Ablaufanschlüsse 5a-5c vorgesehen. Der Mischungseinheits-Zulaufanschluss 4 ist innerhalb der Konditioniereinheit 2 fluidisch mit den drei Mischungseinheits-Ablaufanschlüssen 5a-5c verbunden, um einen Teil des Konditionierkreislaufs KK für das Betriebsmedium auszubilden. Allgemein teilt sich eine mit dem Mischungseinheits-Zulaufanschluss 4 verbundene Hauptstromleitung 6 des Konditionierkreislaufs KK innerhalb der Konditioniereinheit 2 in zumindest zwei Teilstromleitungen 7a+7c (oder 7b+7c) auf, beispielsweise an einem Verteilerknoten 8.

Allgemein ist das Betriebsmedium in einer der zumindest zwei Teilstromleitungen 7a, 7b auf eine vorgegebene Konditionierungs-Temperatur T1, T2 konditionierbar und die zumindest eine weitere Teilstromleitung 7c ist von unkonditioniertem Betriebsmedium mit einer relativ zur Konditionierungs-Temperatur T1, T2 höheren oder niedrigeren Neutral-Temperatur T3 durchströmbar. Die Ausführungsform mit einer gegenüber der Neutral-Temperatur T3 höheren Konditionierungs-Temperatur T1 kann verwendet werden, wenn nur ein Erwärmen des Betriebsmediums im Prüflingskreislauf PK erwünscht ist. Die Ausführungsform mit einer gegenüber der Neutral-Temperatur T3 niedrigeren Konditionierungs-Temperatur T2 kann verwendet werden, wenn ein Kühlen des Betriebsmediums im Prüflingskreislauf PK erwünscht ist. Zur Konditionierung auf die relativ zur Neutral-Temperatur T3 höhere oder niedrigere Konditionierungs-Temperatur T1, T2 kann eine geeignete Temperiereinheit 9a, 9b in der jeweiligen Teilstromleitung 7a, 7b vorgesehen sein, wie nachfolgend noch näher erläutert wird.

Im gezeigten Beispiel in Fig.1a teilt sich die Hauptstromleitung 6 innerhalb der Konditioniereinheit 2 in drei Teilstromleitungen 7a, 7b, 7c, es kann somit eine Erwärmung des Betriebsmediums in der ersten Teilstromleitung 7a erfolgen und eine Kühlung des Betriebsmediums in der zweiten Teilstromleitung 7b. In der Hauptstromleitung 6 kann eine, vorzugsweise steuer- bzw. regelbare Pumpe 15 zur Förderung des Betriebsmediums im Konditionierkreislauf KK vorgesehen sein, es kann aber auch jeweils eine (nicht dargestellte) Pumpe in den Teilstromleitungen 7a-7c vorgesehen sein. Weiters kann auch eine Bypassleitung 16 für das Betriebsmedium vorgesehen sein, die die Hauptstromleitung 6 stromaufwärts der Pumpe 15 mit der Hauptstromleitung 6 stromabwärts der Pumpe verbindet, um die Pumpe 15 zu überbrücken. In der Bypassleitung 16 kann ein steuerbares Ventil 17 vorgesehen sein, um einen durch die Mischungseinheit 3 verursachten Druckverlust $\Delta p$ im Prüflingskreislauf PK zu verringern, vorzugsweise vollständig zu kompensieren, wie nachfolgend anhand der in Fig.2-Fig.4 dargestellten Mischungseinheit 3 noch näher erläutert wird. Alternativ oder zusätzlich zur Bypassleitung 16 inkl. Ventil 17 kann auch eine Drosselstelle 29 mit einer verstellbaren Blende in der Mischungseinheit 3 vorgesehen sein, über die der Druckverlust kompensiert werden kann, wie ebenfalls anhand Fig.2-Fig.4 noch näher erläutert wird.

Im Beispiel gemäß Fig.1a ist jede Teilstromleitung 7a-7c innerhalb der Konditioniereinheit 2 mit jeweils einem Mischungseinheits-Ablaufanschluss 5a-5c verbunden. Die Mischungseinheits-Ablaufanschlüsse 5a-5c können wiederum z.B. über Zulaufleitungen ZLa-Zlc, mit der Mischungseinheit 3 verbunden werden, um das vorkonditionierte Betriebsmedium der Mischungseinheit 3 zuzuführen. Das Betriebsmedium kann in einer ersten Teilstromleitung 7a auf eine erste Konditionierungs-Temperatur T1 konditioniert werden und in einer zweiten Teilstromleitung 7b auf eine zweite Konditionierungs-Temperatur T2 konditioniert werden. Eine dritte Teilstromleitung 7c kann vom Betriebsmedium mit einer zwischen der ersten und zweiten Temperatur liegenden Neutral-Temperatur T3 durchströmt werden und wird vorzugsweise nicht separat konditioniert. Die Temperaturbereiche der Konditionierungs-Temperaturen T1, T2 hängen im Wesentlichen von den vorgegebenen Randbedingungen bzw. Anforderung an das Konditioniersystem 1 ab, wie z.B. von einer minimal bzw. maximal geforderten Soll-Temperatur T_SOLL des Betriebsmediums und/oder dem verwendeten Betriebsmedium. Die zwischen den Konditionierungs-Temperaturen T1, T2 liegende Neutral-Temperatur T3 hängt im Wesentlichen von der Temperatur des von der Mischungseinheit 3 rückströmenden Betriebsmediums ab.

Vorzugsweise ist in der Konditioniereinheit 2 in der ersten Teilstromleitung 7a zumindest eine erste Temperiereinheit 9a vorgesehen, um das Betriebsmedium auf die erste (hohe) Konditionierungs-Temperatur T1 zu konditionieren. Gleichfalls ist vorzugsweise in der zweiten Teilstromleitung 7b zumindest ein zweiter Temperiereinheit 9b vorgesehen, um das Betriebsmedium auf die zweite (niedrige) Konditionierungs-Temperatur T2 zu konditionieren. Als Temperiereinheit 9a, 9b können grundsätzlich alle Einrichtungen verwendet werden, die geeignet sind, das Betriebsmedium in der ersten und zweiten Teilstromleitung 7a, 7b auf die jeweils vorgesehenen Konditionierungs-Temperaturen T1, T2 zu konditionieren, wie z.B. Wärmetauscher, (z.B. elektrische) Heizeinrichtungen, Kühleinrichtungen, Wärmepumpen, Peltierelemente, usw. Beispielsweise können dazu an der Konditioniereinheit 2 zumindest ein Wärmequellen-Vorlaufanschluss 10a und zumindest ein Wärmequellen-Rücklaufanschluss 10b zum Anschluss einer Wärmequelle vorgesehen sein. Der Wärmequellen-Vorlaufanschluss 10a und der Wärmequellen-Rücklaufanschluss 10b können mit der als Wärmetauscher ausgebildeten ersten Temperiereinheit 9a fluidisch verbunden sein, um einen Teil eines Wärmequellen-Versorgungskreislaufs VK1 auszubilden.

In analoger Weise können an der Konditioniereinheit 2 auch zumindest ein Wärmesenken-Vorlaufanschluss 11a und zumindest ein Wärmesenken-Rücklaufanschluss 11b zum Anschluss der Wärmesenke vorgesehen sein, die mit der als Wärmetauscher ausgebildeten zweiten Temperiereinheit 9b fluidisch verbunden sind, um einen Teil eines Wärmesenken-Versorgungskreislaufs VK2 auszubilden. Als Wärmequelle kann im Wesentlichen jede beliebige geeignete Einrichtung verwendet werden, mit der das Versorgungsmedium des Wärmequellen-Versorgungskreislaufs VK1 auf einer möglichst konstanten relativ hohen Versorgungstemperatur gehalten wird, beispielsweise im Bereich von 10K über der max. geforderten Soll-Temperatur. Analog kann als Wärmesenke im Wesentlichen jede beliebige geeignete Einrichtung verwendet werden, mit der das Versorgungsmedium des Wärmesenken-Versorgungskreislaufs VK2 auf einer möglichst konstanten relativ niedrigen Versorgungstemperatur gehalten wird, beispielsweise im Bereich von 10K unter der min. geforderten Soll-Temperatur. Als Versorgungsmedium kann beispielsweise das Betriebsmedium verwendet werden oder ein anderes geeignetes Medium.

Die Wärmebereitstellung durch die Wärmequelle und Wärmesenke kann beispielsweise in einem separaten Versorgungsmodul 12 erfolgen, das eine autarke Einheit bildet, an welche die Konditioniereinheit 2 angeschlossen werden kann. Im Versorgungsmodul 12 können natürlich auch weitere (nicht dargestellte) hydraulische Komponenten für die Versorgungskreisläufe VK1, VK2 vorgesehen sein, beispielsweise Pumpen, Druckregeleinrichtungen, Ventile, Tanks, etc. Die Steuerung des Versorgungsmoduls 12 könnte beispielsweise durch eine Konditioniereinheits-Steuerungseinheit 20 erfolgen, die z.B. in der Konditioniereinheit 2 angeordnet sein kann. Die Steuerung des Versorgungsmoduls 12 könnte aber beispielsweise auch durch eine Prüfstands-Steuerungseinheit 21 des Prüfstands erfolgen, auf dem das Konditioniersystem 1 verwendet wird (wie durch die gestrichelte Verbindungslinie in Fig.1 angedeutet ist).

Oftmals ist auf Prüfständen zur Bereitstellung von vorkonditionierten Versorgungsmedien aber ein zentrales Medienversorgungsystem, beispielsweise als Teil des Prüfstandsgebäudes vorgesehen. Über das zentrale Medienversorgungssystem können beispielsweise mehrere, auch verschiedenartige Prüfstände, mit einem oder mehreren vorkonditionierten Versorgungsmedien versorgt werden. Die Bereitstellung der vorkonditionierten Versorgungsmedien für die Versorgungskreisläufe VK1, VK2 der ersten und zweiten Temperiereinheiten 9a, 9b, insbesondere Wärmetauscher könnte in diesem Fall beispielsweise über Versorgungsleitungen L1, L2 des zentralen Medienversorgungssystems erfolgen, wie in Fig.1a angedeutet ist. Auf ein separates Versorgungsmodul 12 kann in diesem Fall verzichtet werden.

Die Konditioniereinheit 2 ist dazu ausgebildet, einen Durchfluss des Betriebsmediums, z.B. Volumenstrom oder Massenstrom, in den drei Teilstromleitungen 7a-7c (bzw. allgemein zumindest zwei Teilstromleitungen 7a+7c oder 7b+7c) in Abhängigkeit der vorgegebenen Soll-Temperatur T_SOLL des Betriebsmediums im Prüflingskreislauf PK zu steuern, insbesondere zu regeln, sodass die Soll-Temperatur T_SOLL im Prüflingskreislauf PK möglichst rasch eingestellt werden kann. Dazu wird das vorkonditionierte Betriebsmedium aus den Teilstromleitungen 7a-7c der Konditioniereinheit 2 abhängig von der vorgegebenen Soll-Temperatur T_SOLL Prüflingskreislauf PK mit dem Betriebsmedium im Prüflingskreislauf PK gemischt, wobei das Mischen in der Mischungseinheit 3 erfolgt, insbesondere in einem Mischbereich 28 der Mischungseinheit 3, wie nachfolgend anhand Fig.2-Fig.4 noch näher erläutert wird. Um den Konditionierkreislauf KK auszubilden kann die Konditioniereinheit 2 beispielsweise über eine oder mehrere geeignete Zulaufleitungen ZLa-ZLc und eine oder mehrerer geeignete Rücklaufleitungen RL mit der Mischungseinheit 3 verbunden sein.

An der Mischungseinheit 3 sind dazu zumindest ein Konditioniereinheits-Zulaufanschluss 27a und ein Konditioniereinheits-Rücklaufanschluss 27b vorgesehen. Der Konditioniereinheits-Rücklaufanschluss 27b kann über die Rücklaufleitung RL mit dem Mischungseinheits-Zulaufanschluss 4 der Konditioniereinheit 2 verbunden sein. Im gezeigten Beispiel in Fig.1a ist an jeden Mischungseinheits-Ablaufanschluss 5a-5c der Konditioniereinheit 2 eine Zulaufleitung ZLa-ZLc angeschlossen. Wenn an der Mischungseinheit 3 ein einziger Konditioniereinheits-Zulaufanschluss 27a vorgesehen ist, können die Zulaufleitungen ZLa-ZLc vorzugsweise unmittelbar vor der Mischungseinheit 3 zu einer gemeinsamen Sammelleitung SL zusammengeführt sein, wie in Fig.1a angedeutet ist. Die gemeinsame Sammelleitung SL kann dann mit dem Konditioniereinheits-Zulaufanschluss 27a verbunden sein. An der Mischungseinheit 3 könnten aber auch mehrere (nicht dargestellte) Konditioniereinheits-Zulaufanschlüsse 27a vorgesehen sein, beispielsweise drei Konditioniereinheits-Zulaufanschlüsse 27a (bzw. ein Konditioniereinheits-Zulaufanschluss 27a je Zulaufleitung ZLa-ZLc). In diesem Fall könnte jeder Mischungseinheits-Ablaufanschluss 5a-5c über eine Zulaufleitung ZLa-ZLc mit einem Konditioniereinheits-Zulaufanschluss verbunden sein. Die mehreren Konditioniereinheits-Zulaufanschlüsse 27a könnten dann in der Mischungseinheit 3 zu einer Sammelleitung SL zusammengeführt sein, welche wiederum in den Mischbereich 28 der Mischungseinheit 3 mündet. Für ein rasches Erreichen der gewünschten Soll-Temperatur T_SOLL im Prüflingskreislauf PK, ist es vorteilhaft, wenn das vorkonditionierte Betriebsmedium erst möglichst nahe an der Mischungseinheit 3, vorzugsweise erst direkt in der Mischungseinheit 3, zu einem Strom in der Sammelleitung SL zusammengeführt wird.

Die Durchflüsse in den drei Teilstromleitungen 7a-7c der Konditioniereinheit 2 (bzw. allgemein zumindest zwei Teilstromleitungen 7a+7c oder 7b+7c) können in Abhängigkeit der zu erreichenden Sol-Temperatur T_SOLL derart festgelegt werden, dass im Konditionierkreislauf KK ein vorkonditioniertes Gemisch aus Betriebsmedium der ersten Konditionierungs-Temperatur T1 oder Betriebsmedium der zweiten Konditionierungs-Temperatur T2 und Betriebsmedium der dazwischenliegenden Neutral-Temperatur T3 mit einem bestimmten Mischungsverhältnis gebildet wird, sodass sich bei einer Mischung dieses vorkonditionierten Gemisches des Betriebsmediums aus dem Konditionierkreislauf KK mit dem Betriebsmedium des Prüflingskreislaufs PK die vorgegebene Soll-Temperatur T_SOLL im Prüflingskreislaufs PK möglichst rasch einstellt. Die Konditionierungs-Temperaturen T1, T2 sowie die Neutral-Temperatur T3 des Betriebsmediums in den Teilstromleitungen 7a, 7c sind dabei im Wesentlichen konstant und die Soll-Temperatur T_SOLL wird im Wesentlichen nur über die Steuerung bzw. Regelung der Durchflüsse in den Teilstromleitungen 7a-7c der Konditioniereinheit 2 eingestellt, sodass ein bestimmtes Mischungsverhältnis erreicht wird. Wenn nur zwei Teilstromleitungen (warm + neutral oder kalt + neutral) vorgesehen sind, werden natürlich nur diese zwei Teilströme mit einem bestimmten Mischungsverhältnis gemischt, sodass die Soll-Temperatur T_SOLL im Prüflingskreislauf PK eingestellt wird. Der Durchfluss im Konditionierkreislauf KK ist dabei vorzugsweise höher als der Durchfluss im Prüflingskreislauf PK, sodass das Betriebsmedium im Prüflingskreislauf PK vorzugsweise im Wesentlichen vollständig durch das vorkonditionierte Betriebsmedium aus dem Konditionierkreislauf KK ausgetauscht wird.

Zur Steuerung der Durchflüsse kann beispielsweise in der ersten Teilstromleitung 7a und in der zweiten Teilstromleitung 7b des Konditionierkreislaufs KK der Konditioniereinheit 2 jeweils eine bekannte Druckregeleinheit 13a, 13b vorgesehen sein und in der dritten Teilstromleitung 7c kann ein Rückschlagventil 14 vorgesehen sein. In der Hauptstromleitung 6, beispielsweise vor dem Verteilerknoten 8, kann eine erste Messblende 18 mit einem Differenzdrucksensor 18a zur Messung eines Differenzdrucks $\Delta p1$ über der ersten Messblende 18 vorgesehen sein und in der dritten Teilstromleitung 7c, beispielsweise nach dem Verteilerknoten 8, kann eine zweite Messblende 19 mit einem Differenzdrucksensor 19a zur Messung eines Differenzdrucks $\Delta p2$ über der zweiten Messblende 19 vorgesehen sein. Da die Differenzdrücke $\Delta p1$, $\Delta p2$ proportional zum Quadrat des jeweiligen Durchflusses (Volumenstrom, Massenstrom) sind, können aus der Differenz der gemessenen Differenzdrücke $\Delta p1$, $\Delta p2$ die prozentualen Durchflüsse (=Teilvolumenströme, Teilmassenströme) in den Teilstromleitungen 7a-7c berechnet werden. Bei einer Differenz von $\Delta p1- \Delta p2=0$ fließen beispielsweise 100% des Betriebsmediums über die dritte Teilstromleitung 7c, bei einer Differenz $\Delta p1- \Delta p2= 0,5 \times \Delta p1$ fließen beispielsweise 75% des Betriebsmediums über die dritte Teilstromleitung 7c und 25% über die erste oder die zweite Teilstromleitung 7a, 7b (bzw. allgemein über die zumindest eine Teilstromleitung 7a oder 7b) usw. Alternativ kann an Stelle der Messblende 18 mit Differenzdrucksensor 18a und der Messblende 19 mit Differenzdrucksensor 19a aber auch jeweils eine geeignete (nicht dargestellte) Durchflussmesseinheit vorgesehen sein, mit der der Durchfluss (Volumenstrom, Massenstrom) direkt gemessen werden kann, z.B. in Form eines bekannten MID-Sensors (Magnetischinduktiver Durchflussmesser) oder eines Coriolis-Massendurchflussmessers.

Die Steuerung des Konditioniersystems 1 kann beispielsweise über eine geeignete Steuerungseinheit in Form einer Hardware (mikroprozessorbasierte Hardware, integrierte Schaltkreis (wie ein ASIC, FPGA), speicherprogrammierbare Steuerung, analoger Schaltkreis, oder eine Kombination solcher Hardware) und/oder Software erfolgen. Beispielsweise könnte die Steuerung direkt über eine übergeordnete Steuerungseinheit, wie z.B. die Prüfstandssteuerungseinheit 21 des Prüfstands durchgeführt werden, die meist ohnehin auf jedem Prüfstand vorhanden ist. Über die Prüfstandssteuerungseinheit 21 werden üblicherweise der Prüfling P und allfällige weiterer Einrichtungen des Prüfstands gesteuert bzw. geregelt, z.B. eine (nicht dargestellte) Belastungsmaschine zum Antrieb oder zur Belastung des Prüflings P und/oder ein Versorgungsmoduls 12, etc. Alternativ oder zusätzlich könnte auch eine Konditioniereinheits-Steuerungseinheit 20 in der Konditioniereinheit 2 vorgesehen sein. Die Prüfstandssteuerungseinheit 21 könnte dann in geeigneter Weise mit der Konditioniereinheits-Steuerungseinheit 20 kommunizieren, um Steuerungsinformationen auszutauschen. Beispielsweise könnte die Prüfstandssteuerungseinheit 21 über eine geeignete Prüfstands-Schnittstelle S mit der Konditioniereinheit 2 verbunden sein, über welche Steuerungsdaten übermittelt bzw. ausgetauscht werden können.

In der Prüfstandssteuerungseinheit 21 und/oder der Konditioniereinheits-Steuerungseinheit 20 können ein oder mehrere geeignete Regler, beispielswiese PID-Regler, vorgesehen sein, um eine vorgegebene Sollgröße X_IST im Prüflingskreislauf PK einzuregeln, insbesondere die Soll-Temperatur T_SOLL. Optional könnte aber auch ein Soll-Druckverlust $\Delta p\_SOLL$ über der Mischungseinheit 3 eingeregelt werden, insbesondere um den bauartbedingten Druckverlust der Mischungseinheit 3 kompensieren zu können oder verschiedene Druckverluste zu simulieren. In der Regelung kann vorteilhafterweise auch eine bekannte Vorsteuerung (Feed-Forward-Control) implementiert sein, sodass der Regler nur noch kleinere Fehler ausregeln muss. Die Sollwerte X_SOLL der Regelung können beispielsweise über die Prüfstandssteuerungseinheit 21 vorgegeben werden. Beispielsweise kann auch eine Simulationseinheit 22 in der Prüfstandssteuerungseinheit 21 vorgesehen sein, in der ein Simulationsmodell implementiert ist. Mit dem Simulationsmodell 22 kann beispielsweise ein bestimmter zeitlicher Verlauf eines Sollwerts X_SOLL, insbesondere ein zeitlicher Verlauf einer Soll-Temperatur T_SOLL erzeugt werden. Es könnte aber beispielsweise auch ein gemessener zeitlicher Temperaturverlauf als Soll-Temperatur T_SOLL verwendet werden, der beispielswiese aus einer realen Messfahrt mit einem Fahrzeug stammt, beispielsweise aus einem Fahrzeug, in dem der zu untersuchende Prüfling P verbaut war oder aus bereits mit dem Prüfling P durchgeführten Prüfstandsversuchen usw.

Im einfachsten Fall könnte natürlich auch ein konstanter Sollwert X_SOLL, z.B. eine konstante Soll-Temperatur T_SOLL und/oder ein konstanter Druckverlust Δp_SOLL vorgegeben werden, beispielsweise durch manuelle Eingabe über eine geeignete Eingabeeinheit wie z.B. einen Computer. Die Sollwerte X_SOLL können beispielswiese von der Prüfstandssteuerungseinheit 21 über die Prüfstands-Schnittstelle S an die Konditioniereinheits-Steuerungseinheit 20 übergeben werden und von dieser verarbeitet werden. Aus der oder den vorgegebenen Sollwerten X_SOLL und aus erfassten Istwerten X_IST ermittelt die Konditioniereinheits-Steuerungseinheit 20, beispielsweise der darin implementierte Regler, die erforderlichen Stellgrößen X_STELL der für die Regelung erforderlichen Stellglieder, beispielsweise die Druckregeleinheiten 13a, 13b (Fig.1a) und/oder die Pumpe 15 und/oder das steuerbare Ventil 17 in der Bypassleitung 16 und/oder eine nachfolgend noch näher erläuterte Ventileinheit 34 (Fig.1b) und/oder ein Stellglied A einer verstellbaren Blende der Drosselstelle 29 (Fig.1b).

Istwerte X_IST der Regelung können während des Betriebs des Konditioniersystems 1 durch geeignete Sensoren erfasst werden, z.B. an der Konditioniereinheit 2 und der Mischungseinheit 3, und an die Konditioniereinheits-Steuerungseinheit 20 übermittelt werden. In der Konditioniereinheit 2 und der Mischungseinheit 3 können beispielsweise ein oder mehrere Temperatursensoren 23, Drucksensoren 24 und Differenzdrucksensoren 24a, 18a, 19a vorgesehen sein, mit welchen jeweils eine Ist-Temperatur T_IST, ein Ist-Druck p_IST bzw. ein Ist-Differenzdruck Δp_IST des Betriebsmediums (oder des Versorgungsmediums der als Wärmetauscher ausgeführten Temperiereinheiten 9a, 9b) ermittelt werden kann. In der Mischungseinheit 3 kann beispielsweise ein Differenzdrucksensor 24a vorgesehen sein, um den Druckverlust Δp_IST über die Mischungseinheit 3 zu erfassen. Unter einem Differenzdrucksensor 24a können bekanntermaßen natürlich auch zwei einzelne Drucksensoren 24 verstanden werden, die jeweils einen Messwert erzeugen. Der Druckverlust Δp_IST kann dann aus der Differenz der Messwerte der Drucksensoren 24 ermittelt werden. Dasselbe gilt analog natürlich auch für die Differenzdrucksensoren 18a, 19a.

Als Stellglieder zur Regelung der Temperatur im Betriebsmedium des Prüflingskreislaufs PK können beispielsweise die genannten Druckregeleinheiten 13a, 13b der ersten und zweiten Teilstromleitung 7a, 7b vorgesehen sein. Über die Druckregeleinheiten 13a, 13b kann der Durchfluss in den zumindest zwei Teilstromleitungen 7a+7c oder 7b+7c in Abhängigkeit der Soll-Temperatur T_SOLL eingestellt werden. Die Steuerungseinheit 21, 20 kann beispielsweise einen Soll-Differenzdruck Δp2_SOLL in der dritten Teilstromleitung 7c auf Basis der allgemeinen Richmannschen Mi-

$$\Delta p2\_SOLL = \Delta p1 * \frac{(T\_SOLL - T3)}{(Tx - T3)^2}$$

schungsregel gemäß der Beziehung berechnen. Dabei ist Δp1 der mittels Messblende 18 gemessene Differenzdruck in der Hauptstromleitung 6 vor dem Knotenpunkt 8, T_SOLL ist die gewünschte Soll-Temperatur des Betriebsmediums, T3 ist die Neutral-Temperatur des Betriebsmediums in der dritten Teilstromleitung 7c und Tx steht stellvertretend für die Konditionierungs-Temperatur T1 oder T2 des Betriebsmediums in der ersten oder zweiten Teilstromleitung 7a, 7b. Aus dem Soll-Differenzdruck Δp2_SOLL und dem mittels Messblende 19 gemessenen Ist-Differenzdruck Δp2_IST kann die Steuerungseinheit 20, 21 mit einem geeigneten Regler, z.B. einem PI- oder PID-Regler, eine Stellgröße X_STELL ermitteln, mit der die Druckregeleinheiten 13a, 13b angesteuert werden. Wenn statt den Messblenden 18, 19 mit Differenzdrucksensoren 18a, 19a beispielsweise geeignete Durchflussmesseinrichtungen zur Messung des Massenstroms oder Volumenstroms verwendet werden, könnte die Richmannschen Mischungsregel natürlich auch in analoger Weise zur Berechnung eines Soll-Massenstroms oder eines Soll-Volumenstroms herangezogen werden.

Der obige Zusammenhang kann aber beispielsweise auch dazu verwendet werden, um eine Ist-Temperatur T_IST des gemischten Betriebsmediums zu ermitteln, also z.B. im Bereich der Sammelleitung SL in der Mischungseinheit 3, an der in Fig.1a der Temperatursensor 23 dargestellt ist. Das kann insbesondere im dynamischen Betrieb des Konditioniersystems 1, in dem beispielsweise ein zeitlich veränderlicher Temperaturverlauf der Soll-Temperatur T_SOLL im Prüflingskreislauf PK eingestellt werden soll, vorteilhaft sein, weil der Temperatursensor 23 rasche Temperaturänderungen unter Umständen nicht schnell genug erfassen kann. Die Ist-Temperatur T_IST des Gemisches kann bei-

$$T\_IST = \frac{(mx * Tx + m3 * T3)}{mx + m3}$$

spielsweise mit der allgemeinen Richmannschen Mischungsregel gemäß                    berech-

net werden. Dabei steht mx für den Massenstrom m1, m2 des Betriebsmediums in der ersten oder zweiten Teilstromleitung 7a, 7b, Tx steht für die Konditionierungs-Temperatur T1, T2 in der ersten oder zweiten Teilstromleitung 7a, 7b, m3 steht für den Massenstrom in der dritten Teilstromleitung 7c und T3 steht für die Neutral-Temperatur in der dritten Teilstromleitung 7c. Voraussetzung dafür ist, dass die Massenströme mx, m3 bekannt sind. Dafür können beispielsweise geeignete Durchflussmesseinrichtungen zur Messung des Massenstroms mx, m3 anstatt der Messblenden 18, 19 verwendet werden. Wenn statt den Messblenden 18, 19 geeignete Durchflussmesseinrichtungen zur Messung des Volumenstroms vorgesehen sind, könnten natürlich auch die Volumenströme zur Berechnung verwendet werden.

Für die Durchflussmessung mittels der in Fig.1a (und nachfolgend auch in Fig.1b) dargestellten Messblenden 18, 19 mit Differenzdrucksensoren 18a, 19a ergibt sich folgender Zusammenhang:

$$T\_IST = \sqrt{\frac{\Delta p2}{\Delta p1}} * (Tx - T3) + T3$$

.

Als Stellglieder zur Regelung bzw. Kompensation des Druckverlustes in der Mischungseinheit 3 kann beispielsweise das steuerbare Ventil 17 in der Bypassleitung 16 der Pumpe 15 verwendet werden. Alternativ oder zusätzlich zur Regelung über das Ventil 17 kann die Druckverlust-Kompensation auch durch eine Variation der Förderleistung der Pumpe 15 (z.B. durch Variieren einer Pumpendrehzahl) durchgeführt werden. Weiters könnte zur Regelung des Druckverlustes auch eine verstellbare Blende in der Mischungseinheit 3 vorgesehen sein (Fig.1b). In Abhängigkeit der vorgegebenen Sollwerte X_SOLL kann die Konditioniereinheits-Steuerungseinheit 20 entsprechende Stellgrößen X_STELL berechnen und über die Stellglieder einstellen.

In Fig.1b ist eine alternative Ausgestaltung des Konditioniersystems 1 dargestellt. Aufbau und Funktion des Konditioniersystems 1 entsprechen im Wesentlichen dem Konditioniersystem 1 aus Fig.1a, weshalb nachfolgend nur auf die wesentlichen Unterschiede eingegangen wird. Im Unterschied zu Fig.1a ist an der Konditioniereinheit 2 lediglich ein Mischungseinheits-Ablaufanschluss 5 vorgesehen. Die Teilstromleitungen 7a-7c (bzw. allgemein die zumindest zwei Teilstromleitungen 7a+7c oder 7b+7c) sind daher bereits innerhalb der Konditioniereinheit 2 wieder zu einer Konditioniereinheits-Sammelleitung KSL zusammengeführt, welcher mit dem Mischungseinheits-Ablaufanschluss 5 verbunden ist. Folglich ist natürlich auch nur eine einzige Zulaufleitung ZL erforderlich, um die Mischungseinheit 3 mit der Konditioniereinheit 2 zu verbinden. Dadurch sind weniger Leitungen erforderlich, wodurch eine einfachere Verbindung möglich ist.

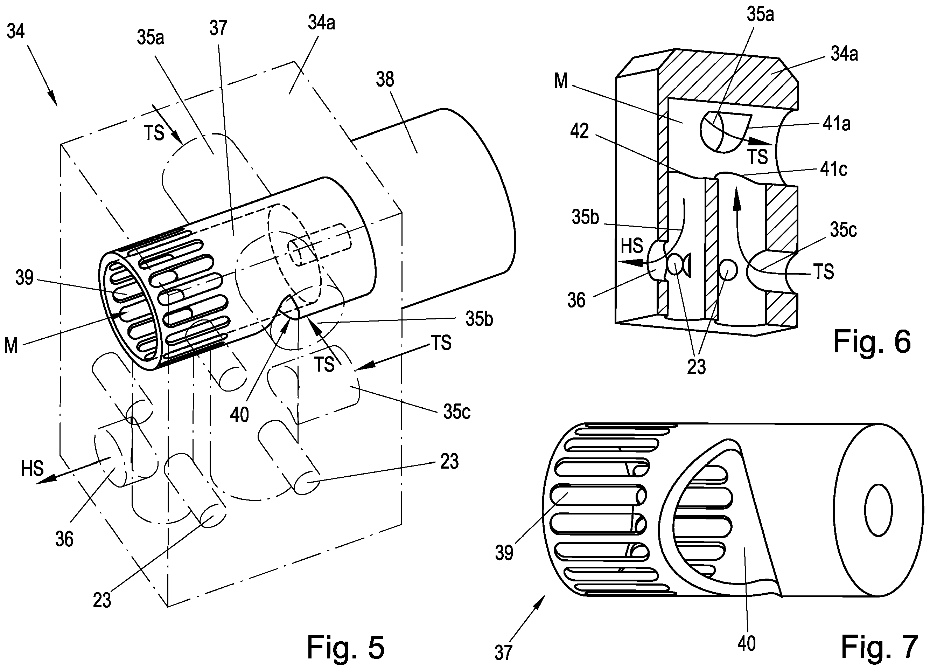

In der Konditioniereinheit 2 kann eine Ventileinheit 34 zum Mischen des Betriebsmediums aus den drei Teilstromleitungen 7a-7c (bzw. allgemein zumindest zwei Teilstromleitungen 7a+7c; 7b+7c) und zum Zuführen zur Konditioniereinheits-Sammelleitung KSL vorgesehen sein. Die Teilstromleitungen 7a-7c sind dabei über die Ventileinheit 34 mit der Konditioniereinheits-Sammelleitung KSL verbunden und die Konditioniereinheits-Sammelleitung KSL ist wiederum mit dem Mischungseinheits-Ablaufanschluss 5 verbunden. Alternativ oder zusätzlich könnte auch am Knotenpunkt 8 eine (nicht dargestellte) Ventileinheit 34 zur Verteilung des Betriebsmediums aus der Hauptstromleitung 6 auf die Teilstromleitungen 7a-7c vorgesehen sein, wobei die Hauptstromleitung 6 über die Ventileinheit 34 mit den Teilstromleitungen 7a-7c verbunden ist. Durch die Verwendung einer steuerbaren Ventileinheit 34 kann auf die Druckregeleinheiten 13a, 13b in den Teilstromleitungen 7a, 7b und das Rückschlagventil 14 in der dritten Teilstromleitung 7c verzichtet werden, wie in Fig.1b ersichtlich ist. Eine vorteilhafte Ausgestaltung der Ventileinheit 34 wird nachfolgend anhand Fig.5 noch näher erläutert.

In der dargestellten Mischungseinheit 3 in Fig.1b ist im Unterschied zu Fig.1a eine verstellbare Blende an der Drosselstelle 29 vorgesehen, die von einem elektrisch ansteuerbaren Stellglied A, beispielsweise einem geeigneten Aktuator, verstellt werden kann, um den Strömungsquerschnitt der Drosselstelle 29 zu verändern. Dadurch können die Bypassleitung 16 und das steuerbare Ventil 27 aus Fig.1a entfallen und die Druckverlustkompensation kann über die Verstellung der Blende mittels des Stellglieds A erfolgen. Dazu kann wiederum ein Differenzdrucksensor 24a zur Messung eines Differenzdrucks Δp als Ist-Größe X_IST in der Mischungseinheit 3 vorgesehen sein. Die Ist-Größe X_IST kann z.B. an die Prüfstands-Steuerungseinheit 21 und/oder an die Konditioniereinheits-Steuerungseinheit 20 übermittelt werden, welche eine Stellgröße X_STELL ermittelt, welche an das Stellglied A übermittelt, wie in Fig.1b angedeutet ist. Wenn die Druckverlustkompensation nur über die Blende erfolgt, könnte in einer einfachen Ausführungsform beispielsweise auch auf eine regelbare Pumpe 15 verzichtet werden und eine Pumpe 15 mit konstanter Förderleistung in der Konditioniereinheit 2 verwendet werden.

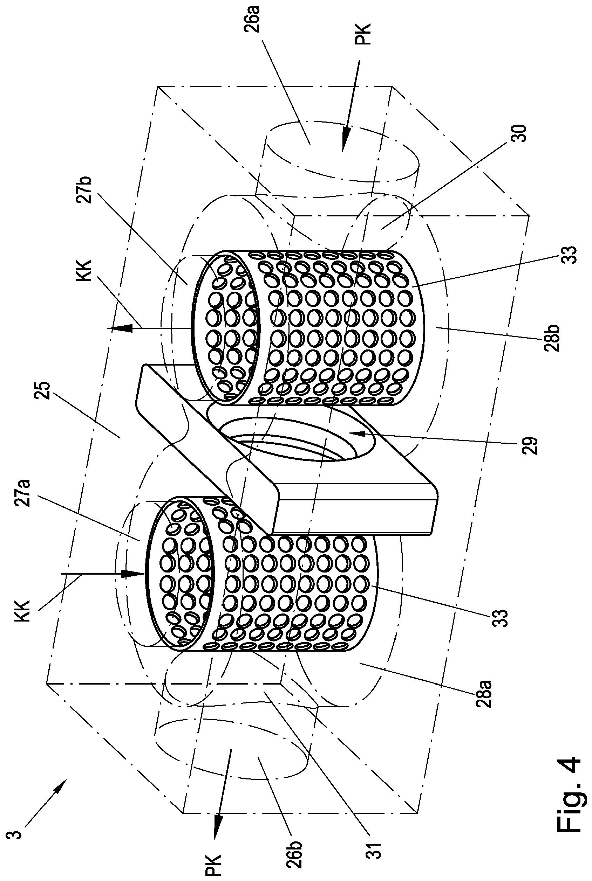

Nachfolgend wird unter Bezugnahme auf Fig.2 bis Fig.4 die Mischungseinheit 3 anhand von zwei vorteilhaften Ausgestaltungen näher erläutert. Dabei zeigt Fig.2 die Mischungseinheit 3 einer ersten Ausführungsform in einer perspektivischen Ansicht und Fig.3 einen Strömungsverlauf des Betriebsmediums innerhalb der Mischungseinheit 3 aus Fig.2 in Draufsicht. Fig.4 zeigt eine Mischungseinheit 3 in einer alternativen Ausführungsform in einer perspektivischen Ansicht. Allgemein kann die Mischungseinheit 3 ein Gehäuse 25 aus einem geeigneten Werkstoff aufweisen, beispielsweise aus einer Stahl- oder Aluminumlegierung oder Kunststoff, in welchem geeignete Strömungskanäle zur Führung des Betriebsmediums vorgesehen sind. An der Mischungseinheit 3 sind zumindest ein Prüflingskreis-Zulaufanschluss 26a und zumindest ein Prüflingskreis-Ablaufanschluss 26b zur fluidischen Integration der Mischungseinheit 3 in den Prüflingskreislauf PK des Prüflings P vorgesehen. Dadurch kann die Mischungseinheit 3 einfach in ein bestehenden Prüflingskreislauf PK eines Prüflings P am Prüfstand integriert werden, ohne dass bauliche Änderungen am Prüfstand erforderlich sind.

Natürlich können an der Mischungseinheit 3 auch nicht dargestellte Verbindungs- und Abdichtelemente vorgesehen sein, um einen möglichst einfachen und leckagefreien Anschluss z.B. einer Rohrleitung oder eines Schlauchs des Prüflingskreislaufs PK an den Prüflingskreis-Zulaufanschluss 26a und den Prüflingskreis-Ablaufanschluss 26b der Mischungseinheit 3 zu ermöglichen. Der Prüflingskreis-Zulaufanschluss 26a und der Prüflingskreis-Ablaufanschluss 26b sind innerhalb der Mischungseinheit 3 über den Mischbereich 28 fluidisch verbunden, um einen Teil des Prüflingskreislaufs PK auszubilden. Betriebsmedium kann somit innerhalb der Mischungseinheit 3 vom Prüflingskreis-Zulaufanschluss 26a über den Mischbereich 28 zum Prüflingskreis-Ablaufanschluss 26b strömen, wie in Fig.2-Fig.4 durch die beiden Pfeile angedeutet ist und wie auch in Fig.3 anhand der Strömung ersichtlich ist. Unter dem Mischbereich 28 ist im Rahmen der Erfindung der gesamte Bereich innerhalb der Mischungseinheit 3 zu verstehen, in dem das Betriebsmedium aus dem Konditionierkreislauf KK und das Betriebsmedium aus dem Prüflingskreislauf PK in Kontakt sind.

Wie beschrieben sind an der Mischungseinheit 3 zumindest ein Konditioniereinheits-Zulaufanschluss 27a und zumindest ein Konditioniereinheits-Rücklaufanschluss 27b zur Verbindung der Mischungseinheit 3 mit der Konditioniereinheit 2 des Konditioniersystems 1 vorgesehen. Die Verbindung kann wie erwähnt beispielsweise über eine Rücklaufleitung RL und eine oder mehrere Zulaufleitungen ZL, ZLa-ZLc erfolgen, beispielsweise eine Zulaufleitung ZLi je Teilstromleitung (Fig.1a) oder eine gemeinsame Zulaufleitung ZL (Fig.1b). Bei mehreren Zulaufleitungen ZLa-ZLc können diese vor der Mischungseinheit 3 zu einer gemeinsamen Sammelleitung SL zusammengeführt sein oder es könnten auch mehrere Konditioniereinheits-Zulaufanschlüsse 27a vorgesehen sein, die jeweils mit einer Zulaufleitung ZLa-ZLc verbunden sein können. Die Zusammenführung des vorkonditionierten Betriebsmediums der aus den Teilströmen zu einem Strom kann hierbei durch eine Sammelleitung SL in der Mischungseinheit 3 erfolgen.

Der zumindest eine Konditioniereinheits-Zulaufanschluss 27a und der zumindest eine Konditioniereinheits-Rücklaufanschluss 27b sind ebenfalls innerhalb der Mischungseinheit 3 über den Mischbereich 28 fluidisch verbunden, um einen Teil des Konditionierkreislaufs KK (siehe Fig.1a, 1b) für das Betriebsmedium auszubilden. Dadurch kann das vorkonditionierte Betriebsmedium, das der Mischungseinheit 3 von der Konditioniereinheit 2 zugeführt wird, innerhalb der Mischungseinheit 3 vom Konditioniereinheits-Zulaufanschluss 27a über den Mischbereich 28 zum Konditioniereinheits-Rücklaufanschluss 27b strömen, wie in Fig.2 durch die beiden Pfeile angedeutet ist. Die Strömung des Betriebsmediums des Konditionierkreislauf KK ist damit der Strömung des Betriebsmediums des Prüflingskreislaufs PK entgegengerichtet, wodurch eine gute Durchmischung erfolgt. Zudem kann dadurch der Druckverlust im Prüflingskreislauf PK über die Drosselstelle 29 kompensiert werden. Natürlich können an der Mischungseinheit 3 wiederum nicht dargestellte Verbindungs- und Abdichtelemente vorgesehen sein, um einen möglichst leckagefreien Anschluss z.B. einer Rohrleitung oder eines Schlauchs des Konditionierkreislaufs KK an den Konditioniereinheits-Zulaufanschluss 27a und den Konditioniereinheits-Ablaufanschluss 27b der Mischungseinheit 3 zu ermöglichen.

In der Mischungseinheit 3 ist wie erwähnt ein Mischbereich 28 vorgesehen, in welchem das Betriebsmedium des Prüflingskreislaufs PK mit dem konditionierten Betriebsmedium aus dem Konditionierkreislauf KK mischbar ist, um das Betriebsmedium im Prüflingskreislauf PK auf die vorgegebene Soll-Temperatur zu konditionieren. Um möglichst rasch ein möglichst homogenes Gemisch aus dem Betriebsmedium des Konditionierkreislaufs KK und dem Betriebsmedium des Prüflingskreislaufs PK zu erzeugen, weist der Mischbereich 28 vorzugsweise zumindest eine im Wesentlichen ringförmige Mischkammer 28a auf, wie insbesondere in Fig.3 ersichtlich ist. Allgemein ist unter ringförmig im Rahmen der Erfindung im Wesentlichen eine beliebige Ringform zu verstehen, beispielsweise ein Zylinderrring, Torus usw. Der Konditioniereinheits-Rücklaufanschluss 27b ist dabei vorzugsweise so an der Mischungseinheit 3 angeordnet, dass er zwischen dem Prüflingskreis-Zulaufanschluss 26a und dem Konditioniereinheits-Zulaufanschluss 27a in den Mischbereich 28 mündet.

Im Beispiel gemäß Fig.2 + Fig.3 mündet der Konditioniereinheits-Rücklaufanschluss 27b beispielsweise zwischen dem Prüflingskreis-Zulaufanschluss 26a und der ringförmigen Mischkammer 28a in den Mischbereich 28. Zusätzlich kann zwischen dem Konditioniereinheits-Zulaufanschluss 27a und dem Konditioniereinheits-Rücklaufanschluss 27b eine Drosselstelle 29 vorgesehen sein. Im Beispiel gemäß Fig.2 + Fig.3 ist die Drosselstelle 29 beispielsweise zwischen der ringförmigen Mischkammer 28a und dem Konditioniereinheits-Rücklaufanschluss 27b angeordnet und als fixe Verengung mit unveränderbarem Strömungsquerschnitt ausgebildet. Durch die Drosselstelle 29 kann in der Strömung des Betriebsmediums zwischen dem Konditioniereinheits-Zulaufanschluss 27a und dem Konditioniereinheits-Rücklaufanschluss 27b ein Differenzdruck erzeugt werden, der dem Differenzdruck in der Strömung des Betriebsmediums im Prüflingskreislauf PK entgegenwirkt. Durch Einstellung eines relativ zum Durchfluss (Volumenstrom oder Massenstrom) im Prüflingskreislauf PK höheren Durchflusses (Volumenstrom oder Massenstrom) des Betriebsmediums im Konditionierkreislauf KK (z.B. über eine vorzugsweise regelbare Pumpe 15 und/oder Bypassleitung 16 mit Ventil 17) kann somit der durch die Mischungseinheit 3 im Prüflingskreislauf PK erzeugte Druckverlust verringert bzw. vorzugsweise vollständig kompensiert oder auf einen bestimmten Wert eingestellt werden. Allgemein ist der Durchfluss (Volumenstrom oder Massenstrom) im Konditionierkreislauf KK vorzugsweise höher als der Durchfluss (Volumenstrom oder Massenstrom) im Prüflingskreislauf PK, beispielsweise 5-20%, insbesondere ca. 10% höher. Dadurch kann das Betriebsmedium des Prüflingskreislaufs PK in der Mischungseinheit 3 in vorteilhafter Weise im Wesentlichen vollständig ausgewechselt und durch konditioniertes Betriebsmedium aus dem Konditionierkreislauf KK ersetzt werden. Die Temperatur des Betriebsmediums im Bereich des zumindest einen Konditioniereinheits-Zulaufanschlusses 27a (z.B. in der Sammelleitung SL - Fig.1a oder in der Zulaufleitung ZL - Fig.1b) entspricht daher vorzugsweise im Wesentlichen der Temperatur des Betriebsmediums im Bereich des Prüflingskreis-Ablaufanschlusses 26b. Als Soll-Temperatur T_SOLL und Ist-Temperatur T_IST kann daher im Rahmen der Erfindung beispielsweise auch die Temperatur im Bereich des zumindest einen Konditioniereinheits-Zulaufanschlusses 27a herangezogen werden.

Zur Steuerung der Druckverlust-Kompensation kann gemäß einer vorteilhaften Ausführungsform aber auch der Strömungsquerschnitt an der Drosselstelle 29 veränderlich sein (alternativ oder zusätzlich zur Steuerung des Durchflusses im Konditionierkreislauf KK in der Konditioniereinheit 2). Wie bereits erwähnt, kann dazu beispielsweise eine verstellbare Blende vorgesehen sein, mittels welcher der Strömungsquerschnitt der Drosselstelle 29 verändert werden kann. Im einfachsten Fall könnte die verstellbare Blende manuell verstellbar sein, vorzugsweise ist allerdings ein elektrisch ansteuerbares Stellglied A (siehe Fig.1b) zur Verstellung der Blende vorgesehen, das z.B. von der Konditioniereinheits-Steuerungseinheit 20 und/oder von der Prüfstandssteuerungseinheit 21 ansteuerbar ist. Die Steuerung bzw. Regelung des Durchflusses des Betriebsmediums des Konditionierkreislaufs KK kann wie erwähnt über eine Steuerungseinheit (z.B. Prüfstandssteuerungseinheit 21 oder Konditioniereinheits-Steuerungseinheit 20) erfolgen. Beispielsweise kann dazu in der Konditioniereinheits-Steuerungseinheit 20 ein geeigneter Regler (z.B. PID-Regler) implementiert sein. Der Regler kann aus dem an Mischungseinheit 3 mittels des Differenzdrucksensors 24a (Fig.1) gemessenen Ist-Differenzdrucks $\Delta p\_IST$ im Prüflingskreislauf PK und einem vorgegebenen Soll-Differenzdrucks $\Delta p\_SOLL$ (z.B. $\Delta p\_SOLL = 0$) eine Stellgröße X_STELL für das steuerbare Ventil 17 in der Bypassleitung 16 der Pumpe 15 der Konditioniereinheit 2 berechnen und das Ventil entsprechend ansteuern. Wie bereits erwähnt, kann in der Regelung auch eine bekannte Vorsteuerung der Stellgröße X_STELL implementiert sein. Die Steuerung des Durchflusses könnte aber z.B. auch über eine Pumpe 15 mit veränderlicher Fördermenge erfolgen, z.B. über eine Pumpe 15 mit regelbarer Pumpendrehzahl. Die Ansteuerung der verstellbaren Blende zur Verstellung des Strömungsquerschnitts könnte beispielsweise ebenfalls über eine separate Steuerungseinheit gesteuert werden, und/oder über die Prüfstandssteuerungseinheit 21 oder die Konditioniereinheits-Steuerungseinheit 20. Wenn die verstellbare Blende an der Drosselstelle 29 geschlossen wird, kann die Pumpe 15 der Konditioniereinheit 2 beispielsweise auch zur Förderung des Betriebsmediums im Prüflingskreislauf PK verwendet werden. In diesem Fall könnte auch auf eine separate Pumpe im Prüflingskreislauf PK verzichtet werden.

Zur Verringerung des Druckverlustes $\Delta p$ im Prüflingskreislauf PK ist es vorteilhaft, wenn eine von radial außen in die ringförmige Mischkammer 28a mündende Zulaufmündung 30 des Prüflingskreis-Zulaufanschlusses 26a und eine von radial außen in die ringförmige Mischkammer 28a mündende Ablaufmündung 31 des Prüflingskreis-Ablaufanschlusses 26b in die Mischkammer 28a in einem Umfangsabstand von zumindest 90° voneinander beabstandet sind, vorzugsweise 180° ± 30°. Weiters kann es vorteilhaft sein, wenn der zumindest eine Konditioniereinheits-Zulaufanschluss 27a bis in einen zentralen Bereich 32 der Mischungseinheit 3 erstreckt und von radial innen in die ringförmige Mischkammer 28a mündet, vorzugsweise im Bereich der Zulaufmündung 30 des Prüflingskreis-Zulaufanschlusses 26a. Wie bereits anhand von Fig.1 beschrieben wurde, kann an der Mischungseinheit 3 zumindest ein Temperatursensor 23 zur Messung der Ist-Temperatur T_IST des Betriebsmediums vorgesehen sein. Vorzugsweise ist ein Temperatursensor 23 im Bereich des Konditioniereinheits-Zulaufanschlusses 27a, ein Temperatursensor 23 im Bereich des Prüflingskreis-Zulaufanschlusses 26a und ein Temperatursensor 23 im Bereich des Prüflingskreis-Ablaufanschlusses 26b vorgesehen, wie in Fig.3 angedeutet ist. Die erfassten Ist-Temperaturen T_IST können z.B. an eine Steuerungseinheit (z.B. Prüfstandssteuerungseinheit 21 oder Konditioniereinheits-Steuerungseinheit 20) zum Einregeln der Soll-Temperatur T_SOLL im Prüflingskreislauf PK übergeben werden.

In Fig.4 ist eine alternative Ausführungsform der Mischungseinheit 3 dargestellt. An der Mischungseinheit 3 sind wiederum zumindest ein Prüflingskreis-Zulaufanschluss 26a, zumindest ein Prüflingskreis-Ablaufanschluss 26b, zumindest ein Konditioniereinheits-Zulaufanschluss 27a und zumindest ein Konditioniereinheits-Rücklaufanschluss 27a vorgesehen. Im Unterschied zur Variante gemäß Fig.3 sind hier zwei im Wesentlichen ringförmige Mischkammern 28a, 28b im Mischbereich 28 vorgesehen, die vorzugsweise radial miteinander kommunizieren. In der Strömungsverbindung zwischen den beiden Ringkammern 28a, 28b ist vorzugsweise eine Drosselstelle 29 vorgesehen. Analog wie anhand von Fig.3 beschrieben, könnte die Drosselstelle 29 wiederum einen unveränderlichen Strömungsquerschnitt aufweisen oder es könnte eine (nicht dargestellte) verstellbare Blende mit einem Stellglied A zur Verstellung des Strömungsquerschnitts vorgesehen sein, wie in Fig.1b angedeutet ist. Der Konditioniereinheits-Zulaufanschluss 27a mündet vorzugsweise in axialer Richtung im Wesentlichen zentral in die erste Mischkammer 28a und der Prüflingskreis-Ablaufanschluss 26b mündet vorzugsweise radial in die erste Mischkammer 28a. In analoger Weise mündet der Konditioniereinheits-Rücklaufanschluss 27b vorzugsweise in axialer Richtung im Wesentlichen zentral in die zweite Mischkammer 28b und der Prüflingskreis-Zulaufanschluss 26a mündet vorzugsweise radial in die zweite Mischkammer 28b. Um den Druckverlust möglichst gering zu halten ist es hier ebenfalls vorteilhaft, wenn eine von radial außen in die zweite ringförmige Mischkammer 28b mündende Zulaufmündung 30 des Prüflingskreis-Zulaufanschlusses 26a und eine von radial außen in die erste ringförmige Mischkammer 28a mündende Ablaufmündung 31 des Prüflingskreis-Ablaufanschlusses 26b in einem Winkel von zumindest 90° voneinander beabstandet sind, vorzugsweise 180°±30°, wobei die Zulaufmündung 30 und die Ablaufmündung 31 vorteilhafterweise fluchten, so wie dargestellt.

Um eine möglichst gute Durchmischung des vorkonditionierten Betriebsmediums aus dem Konditionierkreislauf KK mit dem Betriebsmedium des Prüflingskreislaufs PK zu erreichen, kann es weiters vorteilhaft sein, wenn im Mischbereich 28 zumindest ein Siebelement 33 vorgesehen ist. Dadurch kann eine Turbulenz in der Strömung erzeugt werden, welche die Durchmischung verbessert. Bei entsprechender Anordnung im Strömungsweg kann das zumindest eine Siebelement 33 zudem auch als eine Art Schmutzfilter dienen, sodass z.B. Ablagerungen, oder Schmutzpartikel aus dem Prüflingskreislauf PK nicht in den Konditionierkreislauf KK gelangen können. Dazu kann beispielsweise zumindest im Bereich des Konditioniereinheits-Rücklaufanschlusses 27b zumindest ein Siebelement 33 mit einer hinreichend geringen Maschenweite vorgesehen sein. Allgemein können als Siebelement 33 verschiedene konstruktive Ausführungen verwendet werden, beispielsweise Lochbleche, Drahtgewebe, Metallgitter etc.

Wie in Fig.4 dargestellt, ist es besonders vorteilhaft, wenn in den ringförmigen Mischkammern 28a, 28b jeweils ein, vorzugsweise ringförmig ausgebildetes Siebelement 33 vorgesehen ist. Im gezeigten Beispiel sind die Siebelemente 33 als im Wesentlichen zylindrische Hülsen ausgebildet, an deren Außenumfangsfläche mehrere Öffnungen vorgesehen sind, welche die Außenumfangsfläche mit der Innenumfangsfläche verbinden. Je nach Anzahl, Größe und Verteilung der Öffnungen am Umfang können die Misch- und/oder Filtereigenschaften beeinflusst werden. Bei der Variante gemäß Fig.4 könnte beispielsweise zunächst je Mischkammer 28a, 28b eine, vorzugsweise zylindrische Ausnehmungen vorgesehen werden, z.B. ins Gehäuse 25 gebohrt oder gefräst werden. Danach können die ringförmigen Siebelemente 33 in geeigneter Weise eingesetzt werden. Die ringförmige Mischkammer 28a, 28b bildet sich damit jeweils zwischen der Innenumfangsfläche der zylindrischen Öffnung und der Außenumfangsfläche des ringförmigen Siebelements 33 aus.

Dadurch kann das vorkonditionierte Betriebsmedium aus dem Konditionierkreislauf KK über die Konditioniereinheits-Zulaufanschluss 27a im Wesentlichen in axialer Richtung in den zylindrischen Innenraum des ringförmigen Siebelements 33 strömen und durch die Öffnungen des ringförmigen Siebelements 33 in radialer Richtung in die ringförmige Mischkammer 28a. Von der ringförmigen Mischkammer 28a kann das Betriebsmedium weiter entgegen der Strömungsrichtung des Prüflingskreislaufs PK durch die Drosselstelle 29 in die zweite ringförmige Mischkammer 28b strömen. Von der zweiten ringförmigen Mischkammer 28b kann das Betriebsmedium im Wesentlichen in umgekehrter Richtung wie in der ersten Mischkammer 28a zunächst radial durch die Öffnungen im Siebelement 33 ins Innere des Siebelements 33 und danach in axialer Richtung zum Konditioniereinheits-Rücklaufanschluss 27b strömen, wie durch die Pfeile in Fig.4 angedeutet ist. Gleichzeitig kann während der beschriebenen Strömung des Betriebsmediums des Konditionierkreislaufs KK das Betriebsmedium des Prüflingskreislaufs PK im Wesentlichen in entgegengesetzter Richtung durch den Mischbereich 28 strömen, wie durch die entsprechenden Pfeile angedeutet ist.

In Fig.5 ist schließlich eine Ventileinheit 34 zur Verwendung in der Konditioniereinheit 2 in einer vorteilhaften Ausgestaltung dargestellt. Fig.6 zeigt eine Schnittdarstellung des Ventilgehäuses 34a der Ventileinheit 34 aus Fig.5. Fig.7 zeigt ein Mischelement 37 der Ventileinheit 34 aus Fig.5. Wie bereits beschrieben kann die Ventileinheit 34 zur Verteilung eines Haupt-Fluidstroms HS eines (flüssigen oder gasförmigen) Betriebsmediums auf zumindest zwei Teil-Fluidströme TS und/oder zum Mischen von zumindest zwei Teil-Fluidströmen eines Betriebsmediums oder mehrerer verschiedener Betriebsmedien zu einem Haupt-Fluidstrom HS verwendet werden. Die Ventileinheit 34 kann daher in vorteilhafter Weise z.B. in der in Fig.1b gezeigten Konditioniereinheit 2 verwendet werden, um die drei Teilstromleitungen 7a-7c zu einer Konditionier-Sammelleitung KSL zusammenzuführen. Die Ventileinheit 34 könnte zusätzlich oder alternativ aber auch in der Konditioniereinheit 2 am Knotenpunkt 8 verwendet werden, um die Hauptstromleitung 6 auf die drei Teilstromleitungen 7a-7c zu verteilen. Unabhängig von der Konditioniereinheit 2 könnte die Ventileinheit 34 aber beispielsweise auch für andere Zwecke vorgesehen sein, beispielsweise um im Haupt-Fluidstrom HS ein Gemisch aus verschiedenen Gasen zu erzeugen, die der Ventileinheit 34 über die Teil-Fluidströme TS zugeführt werden.

Beispielsweise könnte ein Synthesegas aus Sauerstoff $O_2$, Stickstoff $N_2$ und Kohlendioxid $CO_2$ erzeugt werden.

Die Ventileinheit 34 bzw. das Ventilgehäuse 34a weist zumindest einen Haupt-Fluidstromanschluss 36 für den Haupt-Fluidstrom HS und zumindest einen Teil-Fluidstromanschluss 35a-35c je Teil-Fluidstrom TS auf, die über einen in der Ventileinheit 34 vorgesehenen Mischraum M fluidisch kommunizieren. Wenn die Ventileinheit gemäß Fig.1b zum Mischen der Teil-Fluidströme TS der Teilstromleitungen 7a-7c verwendet wird, kann beispielsweise die erste Teilstromleitung 7a mit einem dem ersten Teil-Fluidstromanschluss 35a verbunden werden, die zweite Teilstromleitung 7b mit dem zweiten Teil-Fluidstromanschluss 35b und die dritte Teilstromleitung 7c mit dem dritten Teil-Fluidstromanschluss 35c. Die Konditioniereinheits-Sammelleitung KSL kann mit dem Haupt-Fluidstromanschluss 36 verbunden werden. Im Mischraum M ist ein bewegliches Mischelement 37 zum Steuern des Durchflusses vorgesehen, das von einer Antriebseinheit 38 antreibbar ist. Je nach Stellung des Mischelements 37 kann ein bestimmtes Mischungsverhältnis der Teil-Fluidströme eingestellt werden.

Im gezeigten Beispiel ist das Mischelement 37 beispielsweise als drehbarer Rotor ausgebildet und die Antriebseinheit 38 ist als elektrisch betätigbarer Aktuator ausgebildet, wie in Fig.5 ersichtlich ist. Die Antriebseinheit 38 kann beispielsweise von einer geeigneten Steuerungseinheit angesteuert werden, um die Teil-Fluidströme TS mit einem bestimmten Mischungsverhältnis zu mischen (oder in einem bestimmten Verhältnis zu verteilen). Im Beispiel gemäß Fig.1b kann die Ventileinheit 34 beispielsweise von der Konditioniereinheits-Steuerungseinheit 20 mit einer bestimmten Stellgröße X_STELL angesteuert werden, um ein Mischungsverhältnis des Betriebsmediums aus den Teilstromleitungen 7a-7c einzustellen, sodass die gewünschte Soll-Temperatur T_SOLL im Prüflingskreislauf PK erreicht wird.

Wie in Fig.6 und Fig.7 ersichtlich ist, kann der Mischraum M beispielsweise zumindest teilweise zylindrisch ausgebildet sein und das Mischelement 37 bzw. der Rotor kann beispielsweise einen Hohlzylinder aufweisen, der im Mischraum M drehbar ist (siehe Fig.5). An der Außenumfangsfläche des Hohlzylinders ist vorzugsweise eine Steueröffnung 40 vorgesehen, welche die Außenumfangsfläche des Hohlzylinders mit der Innenumfangsfläche verbindet. Die Steueröffnung 40 kann beispielsweise eine zylindrische Bohrung sein, kann aber auch eine andere Form aufweisen. Im gezeigten Beispiel ist die Steueröffnung 40 beispielsweise als eine Art Einkerbung ausgebildet. Die Steueröffnung 40 erstreckt sich in Umfangsrichtung über einen vorgegebenen Bereich, der im Wesentlichen von der konstruktiven Ausgestaltung der Ventileinheit 34 abhängt, insbesondere von der relativen Anordnung der Anordnung der Zulaufmündungen 41a-41c der Teil-Fluidstromanschlüsse 35a-35c in den Mischraum M, wobei in Fig.6 nur die Zulaufmündungen 41a, 41c ersichtlich sind. Beispielsweise kann sich die Steueröffnung 40 über 90-180° in Umfangsrichtung erstrecken. In axialer Richtung entspricht die Länge der Steueröffnung 40 vorzugsweise der Länge der Zulaufmündungen der Teil-Fluidstromanschlüsse 35a-35c. Durch Drehung des Rotors bzw. Hohlzylinders mittels der Antriebseinheit 38 kann die Steueröffnung 40 zumindest teilweise in Übereinstimmung mit jeweils zumindest einer in den Mischraum M mündenden Zulaufmündung 41a-41c der Teil-Fluidstromanschlüsse 35a-35c gebracht werden. Bei Verwendung der Ventileinheit 34 als Mischventil (wie in Fig.1b) kann dadurch ein bestimmtes Mischungsverhältnis der Teil-Fluidströme TS des Betriebsmediums (oder der unterschiedlichen Betriebsmedien) im Haupt-Fluidstrom HS eingestellt werden.

Im gezeigten Beispiel gemäß Fig.5 kann der Rotor beispielsweise vorzugsweise stufenlos zwischen einer ersten Position, in welcher die Steueröffnung 40 ausschließlich mit der Zulaufmündung 41a des ersten Teil-Fluidstromanschlusses 35a kommuniziert, einer zweiten Position, in welcher die Steueröffnung 40 ausschließlich mit der Zulaufmündung 41b des zweiten Teil-Fluidstromanschlusses 35b kommuniziert und einer dritten Position (vertikal nach unten), in welcher die Steueröffnung 40 ausschließlich mit der Zulaufmündung 41c des dritten Teil-Fluidstromanschlusses 35c kommuniziert, verdreht werden. In der ersten Position sind die Zulaufmündungen 41b, 41c des zweiten und dritten Teil-Fluidstromanschlusses 35b, 35c verschlossen, sodass 100% des Durchflusses über den ersten Teil-Fluidstromanschluss 35a strömen kann. In der zweiten Position sind die Zulaufmündungen 41a, 41c des ersten und dritten Teil-Fluidstromanschlusses 35a, 35c verschlossen, sodass 100% des Durchflusses über den zweiten Teil-Fluidstromanschluss 35b strömen und in der dritten Position sind die Zulaufmündungen 41a, 41b des ersten und zweiten Teil-Fluidstromanschlusses 35a, 35b verschlossen, sodass 100% des Durchflusses über den dritten Teil-Fluidstromanschluss 35c strömen kann. Bei einer zwischen der ersten und dritten Position liegenden Position der Steueröffnung 40 werden der erste Teil-Fluidstrom und der dritte Teil-Fluidstrom in einem bestimmten Verhältnis gemischt. Bei einer zwischen der zweiten und dritten Position liegenden Position der Steueröffnung 40 werden der zweite Teil-Fluidstrom und der dritte Teil-Fluidstrom in einem bestimmten Verhältnis gemischt. Das jeweilige Mischungsverhältnis hängt dabei im Wesentlichen von der Größe und Geometrie der Steueröffnung 40 sowie von der Größe und Geometrie der Zulaufmündungen 41a-41c der Teil-Fluidstromanschlüsse 35a-35c ab.

An der Außenumfangsfläche des Hohlzylinders kann vorzugsweise auch zumindest eine Verwirbelungs-Ausnehmung 39 vorgesehen sein, welche die Außenumfangsfläche des Hohlzylinders mit der Innenumfangsfläche verbindet. Vorzugsweise sind, so wie in Fig.5 und Fig.7 dargestellt, mehrere Verwirbelungs-Ausnehmungen 39 in Umfangsrichtung am Hohlzylinder vorgesehen. Die Verwirbelungs-Ausnehmungen 39 sind in axialer Richtung in einem Abschnitt des Hohlzylinders angeordnet, der in einem Bereich einer Einmündung 42 des Haupt-Fluidstromanschlusses 36 in Mischraum M liegt. Dadurch kann eine Turbulenz in der Strömung erzeugt werden, wodurch eine verbesserte Durchmischung der Teil-Fluidströme TS erreicht werden kann. Bei der Mischung von Teil-Fluidströmen TS mit unterschiedlichen Temperaturen kann dies beispielsweise vorteilhaft sein, um eine möglichst genaue Temperatur des Gemisches im Haupt-Fluidstrom HS direkt an der Ventileinheit 34 zu ermöglichen, z.B. mit dem in Fig.5 angedeuteten Temperatursensor 23. Wie angedeutet, können natürlich auch weitere Temperatursensoren 23 an der Ventileinheit 34 vorgesehen sein, z.B. ein Temperatursensor 23 je Teil-Fluidstromanschluss 35a-35c. Um das Mischen der Teil-Fluidströme TS weiter zu verbessern, können die Ausnehmungen 39 beispielsweise als Langlöcher ausgebildet sein, deren Hauptachsen beispielsweise parallel zur Achse des Hohlzylinders verlaufen.

Natürlich ist die dargestellte Ventileinheit 34 aber nur beispielhaft zu verstehen und es wären natürlich auch andere Ausgestaltungen denkbar. Der Mischraum M und das Mischelement 37 müssen beispielsweise nicht zylindrisch ausgebildet sein, sondern könnten auch eine andere Form aufweisen. Je nach konstruktiver Ausgestaltung der Ventileinheit 34, insbesondere des Mischelements 37, des Mischraums M sowie der Position, Größe und Geometrie der Steueröffnung 40 kann das Mischverhalten der Ventileinheit 34 an bestimmte Randbedingungen angepasst werden.

**Patentansprüche**

1. Konditioniereinheit (2) für ein Konditioniersystem (1) eines Prüfstands zur Konditionierung eines Betriebsmediums eines Prüflingskreislaufs (PK) eines am Prüfstand aufgebauten Prüflings (P) auf eine vorgegebene Soll-Temperatur (T_SOLL), **dadurch gekennzeichnet, dass** an der Konditioniereinheit (2) zumindest ein Mischungseinheits-Zulaufanschluss (4) und zumindest ein Mischungseinheits-Ablaufanschluss (5, 5a-5c), zur Verbindung der Konditioniereinheit (2) mit einer in den Prüflingskreislauf (PK) fluidisch integrierbaren Mischungseinheit (3) vorgesehen sind, wobei der zumindest eine Mischungseinheits-Zulaufanschluss (4) und der zumindest eine Mischungseinheits-Ablaufanschluss (5, 5a-5c) innerhalb der Konditioniereinheit (2) fluidisch verbunden sind, um einen Teil eines Konditionierkreislaufs (KK) für das Betriebsmedium auszubilden, wobei sich eine mit dem zumindest einen Mischungseinheits-Zulaufanschluss (4) verbundene Hauptstromleitung (6) des Konditionierkreislaufs (KK) in der Konditioniereinheit (2) in zumindest zwei Teilstromleitungen (7a7c) aufteilt, wobei jede Teilstromleitung (7a-7c) mit dem zumindest einen Mischungseinheits-Ablaufanschluss (5, 5a-5c) verbunden ist, wobei das Betriebsmedium in einer Teilstromleitung (7a, 7b) auf eine vorgegebene Konditionierungs-Temperatur (T1, T2) konditionierbar ist und die zumindest eine weitere Teilstromleitung (7c) von unkonditioniertem Betriebsmedium mit einer relativ zur Konditionierungs-Temperatur (T1, T2) höheren oder niedrigeren Neutral-Temperatur (T3) durchströmbar ist, wobei ein Durchfluss des Betriebsmediums in den zumindest zwei Teilstromleitungen (7a-7c) in Abhängigkeit der vorgegebenen Soll-Temperatur (T_SOLL) im Prüflingskreislauf (PK) einstellbar ist.

2. Konditioniereinheit (2) nach Anspruch 1, **dadurch gekennzeichnet, dass** sich die Hauptstromleitung (6) in zumindest drei Teilstromleitungen (7a-7c) aufteilt, wobei jede Teilstromleitung (7a-7c) mit dem zumindest einen Mischungseinheits-Ablaufanschluss (5, 5a-5c) verbunden ist, wobei das Betriebsmedium in einer ersten Teilstromleitung (7a) auf eine erste Konditionierungs-Temperatur (T1) konditionierbar ist, in einer zweiten Teilstromleitung (7b) auf eine zweite Temperatur (T2) konditionierbar ist und eine dritte Teilstromleitung (7c) vom unkonditionierten Betriebsmedium mit einer zwischen der ersten und zweiten Konditionierungs-Temperatur (T1, T2) liegenden Neutral-Temperatur (T3) durchströmbar ist.

3. Konditioniereinheit (2) nach Anspruch 1 oder 2, **dadurch gekennzeichnet, dass** in der Konditioniereinheit (2) in zumindest einer Teilstromleitung (7a, 7b) zumindest eine, vorzugsweise als Wärmetauscher ausgebildete Temperiereinheit (9a, 9b) vorgesehen ist, um das Betriebsmedium auf die jeweilige Konditionierungs-Temperatur (T1, T2) zu konditionieren.

4. Konditioniereinheit (2) nach Anspruch 3, **dadurch gekennzeichnet, dass** an der Konditioniereinheit (2) zumindest ein Wärmequellen-Vorlaufanschluss (10a) und zumindest ein Wärmequellen-Rücklaufanschluss (10b) zum Anschluss einer Wärmequelle vorgesehen sind, die mit einem in der, zur Konditionierung des Betriebsmediums auf die relativ zur Neutral-Temperatur (T3) höhere Konditionierungs-Temperatur (T1) vorgesehenen, Teilstromleitung (7a) angeordneten Wärmetauscher (9a) fluidisch verbunden sind, um einen Teil eines Wärmequellen-Versorgungskreislaufs (VK1) auszubilden **und/oder** dass an der Konditioniereinheit (2) zumindest ein Wärmesenken-Vorlaufanschluss (11a) und zumindest ein Wärmesenken-Rücklaufanschluss (11b) zum Anschluss einer Wärmesenke vorgesehen sind, die mit einem in der, zur Konditionierung des Betriebsmediums auf die relativ zur Neutral-Temperatur (T3) niedrigere Konditionierungs-Temperatur (T2) vorgesehenen, Teilstromleitung (7b) angeordneten Wärmetauscher (9b) fluidisch verbunden sind, um einen Teil eines Wärmesenken-Versorgungskreislaufs (VK2) auszubilden.

5. Konditioniereinheit (2) nach einem der Ansprüche 1 bis 4, **dadurch gekennzeichnet, dass** in der Konditioniereinheit (2) zumindest eine Konditioniereinheits-Steuerungseinheit (20) zur Steuerung zumindest des Durchflusses des Betriebsmediums in den zumindest zwei Teilstromleitungen (7a-7c) vorgesehen ist **und/oder** dass die Konditioniereinheit (2) zur Steuerung zumindest des Durchflusses des Betriebsmediums in den zumindest zwei Teilstromleitungen (7a-7c) über eine Prüfstands-Schnittstelle (S) mit einer Prüfstands-Steuerungseinheit (21) verbindbar ist.

6. Konditioniereinheit (2) nach einem der Ansprüche 1 bis 5, **dadurch gekennzeichnet, dass** in der zumindest einen Teilstromleitung (7a, 7b), in der das Betriebsmedium auf die jeweilige Konditionierungs-Temperatur (T1, T2) konditionierbar ist eine Druckregeleinheit (13a, 13b) vorgesehen ist **und dass** in der zumindest einen weiteren Teilstromleitung (7c), die von unkonditioniertem Betriebsmedium durchströmbar ist, ein Rückschlagventil (14) vorgesehen ist, wobei die zumindest eine Druckregeleinheit (13a, 13b) von zumindest einer Steuerungseinheit (20, 21) ansteuerbar ist, um den Durchfluss in den zumindest zwei Teilstromleitungen (7a-7c) einzustellen.

7. Konditioniereinheit (2) nach einem der Ansprüche 1 bis 6, **dadurch gekennzeichnet, dass** in der Hauptstromleitung (6) eine erste Messblende (18) mit einem Differenzdrucksensor (18a) zur Messung eines Differenzdrucks (Δp1) über der ersten Messblende (18) oder eine Durchflussmesseinheit vorgesehen ist **und dass** in der zumindest einen weiteren Teilstromleitung (7c), die von unkonditioniertem Betriebsmedium durchströmbar ist, eine zweite Messblende (19) mit einem Differenzdrucksensor (19a) zur Messung eines Differenzdrucks (Δp2) über der zweiten Messblende (19) oder eine Durchflussmesseinheit vorgesehen ist, wobei die Steuerungseinheit (21, 20) vorzugsweise dazu ausgebildet ist, einen Soll-Differenzdruck (Δp2_SOLL) in der dritten Teilstromleitung (7c) in Abhängigkeit der vorgegebenen Soll-Temperatur (T_SOLL) gemäß der Beziehung

$$\Delta p2\_SOLL = \Delta p1 * \frac{(T\_SOLL - T3)}{(Tx - T3)^2} \text{ mit Tx=T1}$$

oder T2 zu berechnen und aus einem mit dem Differenzdrucksensor (19a) gemessenen Ist-Differenzdruck (Δp2_SOLL) und dem Soll-Differenzdruck (Δp2_SOLL) eine Stellgröße (X_STELL) für die zumindest eine Druckregeleinheit (13a, 13b) zu berechnen.

8. Konditioniereinheit (2) nach einem der Ansprüche 1 bis 7, **dadurch gekennzeichnet, dass** in der Hauptstromleitung (6) eine Pumpe (15) zur Förderung des Betriebsmediums im Konditionierkreislauf (KK) vorgesehen ist, die vorzugsweise von einer Steuerungseinheit (20, 21) steuerbar ist, wobei im Konditionierkreislauf (KK) vorzugsweise eine Bypassleitung (16) für das Betriebsmedium zur Überbrückung der Pumpe (15) vorgesehen ist, wobei in der Bypassleitung (16) ein steuerbares Ventil (17) vorgesehen ist, wobei das steuerbare Ventil vorzugsweise von einer Steuerungseinheit (20, 21) steuerbar ist..

9. Konditioniereinheit (2) nach einem der Ansprüche 1 bis 8, **dadurch gekennzeichnet, dass** in der Konditioniereinheit (2) eine steuerbare Ventileinheit (34) zur Verteilung des Betriebsmediums aus der Hauptstromleitung (6) auf die zumindest zwei Teilstromleitungen (7a-7c) vorgesehen ist, wobei die Hauptstromleitung (6) über die Ventileinheit (34) mit den zumindest zwei Teilstromleitungen (7a-7c) verbunden ist **und/oder dass** in der Konditioniereinheit (2) eine steuerbare Ventileinheit (34) zum Mischen des Betriebsmediums aus den zumindest zwei Teilstromleitungen (7a-7c) und Zuführen zu einer Konditioniereinheits-Sammelleitung (KSL) vorgesehen ist, wobei die zumindest zwei Teilstromleitungen (7a-7c) über die Ventileinheit (34) mit der Konditioniereinheits-Sammelleitung (KSL) verbunden sind und die Konditioniereinheits-Sammelleitung (KSL) mit dem zumindest einen Mischungseinheits-Ablaufanschluss (5) verbunden ist.

10. Konditioniereinheit (2) nach Anspruch 9, **dadurch gekennzeichnet, dass** die Ventileinheit (34) zumindest einen Haupt-Fluidstromanschluss (36) für den Haupt-Fluidstrom (HS) und zumindest einen Teil-Fluidstromanschluss (35a-35c) je Teil-Fluidstrom (TS) aufweist, die über einen Mischraum (M) fluidisch kommunizieren, wobei im Mischraum (M) ein bewegliches Mischelement (37) zum vorzugsweise stufenlosen Steuern eines Verteilungsverhältnisses oder eines Mischungsverhältnisses der Teil-Fluidströme (TS) vorgesehen ist, das von einer Antriebseinheit (38) antreibbar ist.

11. Konditioniereinheit (2) nach Anspruch 10, **dadurch gekennzeichnet, dass** das Mischelement (37) als drehbarer Rotor ausgebildet ist und dass die Antriebseinheit (38) zur Drehung des Rotors als elektrisch betätigbarer Aktuator ausgebildet ist, wobei der Rotor vorzugsweise einen Hohlzylinder aufweist, wobei an der Außenumfangsfläche des Hohlzylinders eine Steueröffnung (40) vorgesehen ist, welche die Außenumfangsfläche des Hohlzylinders mit der Innenumfangsfläche verbindet, wobei der Rotor, vorzugsweise stufenlos, verdrehbar ist, um die Steueröffnung (40) in eine zumindest teilweise Übereinstimmung mit jeweils zumindest einer in den Mischraum (M) mündenden Zulaufmündung der Teil-Fluidstromanschlüsse (35a-35c) zu bringen, wobei in einer besonders bevorzugten Weise an der Außenumfangsfläche des Hohlzylinders zumindest eine Verwirbelungs-Ausnehmung (39) vorgesehen ist, welche die Außenumfangsfläche des Hohlzylinders mit der Innenumfangsfläche verbindet, wobei die Verwirbelungs-Ausnehmung (39) in axialer Richtung in einem Abschnitt des Hohlzylinders angeordnet ist, der in einem Bereich einer Einmündung des Haupt-Fluidstromanschlusses (36) in Mischraum (M) liegt und wobei die Verwirbelungs-Ausnehmung (39) vorzugsweise als Langloch ausgebildet ist.

12. Verfahren zum Konditionieren eines in einem Prüflingskreislauf (PK) eines auf einem Prüfstand aufgebauten Prüflings (P) strömenden Betriebsmediums auf eine vorgegebene Soll-Temperatur (T_SOLL), **dadurch gekennzeichnet, dass** eine Mischungseinheit (3) in den Prüflingskreislauf (PK) fluidisch integriert wird, um einen Teil des Prüflingskreislaufs (PK) auszubilden, wobei zu konditionierendes Betriebsmedium des Prüflingskreislaufs (PK) der Mischungseinheit (3) über zumindest einen Prüflingskreis-Zulaufanschluss (26a) zugeführt wird und auf die vorgegebene Soll-Temperatur (T_SOLL) konditioniertes Betriebsmedium über zumindest einen Prüflingskreis-Ablaufanschluss (26b) von der Mischungseinheit (3) abgeführt wird, wobei der Mischungseinheit (3) über zumindest einen Konditioniereinheits-Zulaufanschluss (27a) zumindest Betriebsmedium mit einer vorgegebenen Konditionierungs-Temperatur (T1, T2) und Betriebsmedium mit einer relativ dazu höheren oder niedrigeren Neutral-Temperatur (T3) zugeführt wird, das in einem innerhalb der Mischungseinheit (3) vorgesehenen Mischbereich (28) mit dem zugeführten Betriebsmedium des Prüflingskreislaufs (PK) gemischt wird und über zumindest einen Konditioniereinheits-Rücklaufanschluss (27b) von der Mischungseinheit (3) abgeführt wird, wobei ein Durchfluss des Betriebsmediums mit der Konditionierungs-Temperatur (T1, T2) und ein Durchfluss des Betriebsmediums mit der Neutral-Temperatur (T3) in Abhängigkeit der vorgegebenen Soll-Temperatur (T_SOLL) eingestellt wird.

**13.** Verfahren nach Anspruch 12, **dadurch gekennzeichnet, dass** zumindest eine Ist-Temperatur (T_IST) des Betriebsmediums im Prüflingskreislauf (PK) oder im Konditionierkreislauf (KK) ermittelt wird und einer Steuerungseinheit (20, 21) zugeführt wird, wobei die Steuerungseinheit (20, 21) in Abhängigkeit der ermittelten Ist-Temperatur (T_IST) und der vorgegebenen Soll-Temperatur (T_SOLL) den Durchfluss des Betriebsmediums mit der Konditionierungs-Temperatur (T1, T2) und den Durchfluss des Betriebsmediums mit der Neutral-Temperatur (T3)steuert.

**14.** Verfahren nach Anspruch 13, **dadurch gekennzeichnet, dass** die Ist-Temperatur (T_IST) auf Basis der Richmannschen Mischungsregel berechnet wird, vorzugsweise gemäß $T\_IST = \dfrac{(mx * Tx + m3 * T3)}{mx + m3}$ mit einem Massenstrom (mx) des Betriebsmediums mit der Konditionierungs-Temperatur (T1, T2) und einem Massenstrom (m3) des Betriebsmediums mit der Neutral-Temperatur (T3).

**15.** Verfahren nach Anspruch 12 oder 13, **dadurch gekennzeichnet, dass** das der Mischungseinheit (3) über den zumindest einen Konditioniereinheits-Zulaufanschluss (27a) zugeführte Betriebsmedium entgegen einer Strömungsrichtung des Prüflingskreislaufs (PK) zum zumindest einen Konditioniereinheits-Rücklaufanschluss (27b) strömt.

**16.** Verfahren nach einem der Ansprüche 12 bis 15, **dadurch gekennzeichnet, dass** im Prüflingskreislauf (PK) in der Mischungseinheit (3) ein Ist-Druckverlust (Δp_IST) erfasst wird und dass der Durchfluss des Betriebsmediums mit der Konditionierungs-Temperatur (T1, T2) und der Durchfluss des Betriebsmediums mit der Neutral-Temperatur (T3)so festgelegt wird und/oder ein Strömungsquerschnitt einer im Mischbereich (28) vorgesehenen Drosselstelle (29) so festgelegt wird, dass der Druckverlust (Δp) im Prüflingskreislauf (PK) der Mischungseinheit (3) auf einen vorgegebenen Soll-Druckverlust (Δp_SOLL) eingestellt, vorzugsweise kompensiert, wird.

## Claims

**1.** Conditioning unit (2) for a conditioning system (1) of a test bench for conditioning an operating medium of a test object circuit (PK) of a test object (P) mounted on the test bench to a predefined setpoint temperature (T_SOLL), **characterized in that** at least one mixing unit supply connection (4) and at least one mixing unit outlet connection (5, 5a-5c) are provided on the conditioning unit (2) for connecting the conditioning unit (2) to a mixing unit (3) which can be fluidically integrated into the test object circuit (PK), wherein the at least one mixing unit supply connection (4) and the at least one mixing unit outlet connection (5, 5a-5c) are fluidically connected within the conditioning unit (2) to form a part of a conditioning circuit (KK) for the operating medium, wherein a main flow line (6) of the conditioning circuit (KK) connected to the at least one mixing unit supply connection (4) is divided in the conditioning unit (2) into at least two partial flow lines (7a-7c), wherein each partial flow line (7a-7c) is connected with the at least one mixing unit outlet connection (5, 5a-5c), wherein the operating medium is able to be conditioned in a partial flow line (7a, 7b) to a predefined conditioning temperature (T1, T2), and the at least one further partial flow line (7c) is able to be flowed through by unconditioned operating medium having a relatively higher or lower neutral temperature (T3) compared to the conditioning temperature (T1, T2), wherein a flow rate of the operating medium in the at least two partial flow lines (7a-7c) is able to be adjusted as a function of the predefined setpoint temperature (T_SOLL) in the test object circuit (PK).

**2.** Conditioning unit (2) according to claim 1, **characterized in that** the main flow line (6) is divided into at least three partial flow lines (7a-7c), wherein each partial flow line (7a-7c) is connected to the at least one mixing unit outlet connection (5, 5a-5c), wherein the operating medium is able to be conditioned in a first partial flow line (7a) to a first conditioning temperature (T1), is able to be conditioned in a second partial flow line (7b) to a second temperature (T2), and a third partial flow line (7c) is able to be flowed through by unconditioned operating medium having a neutral temperature (T3) lying between the first and second conditioning temperature (T1, T2).

3.  Conditioning unit (2) according to claim 1 or 2, **characterized in that** at least one temperature control unit (9a, 9b), preferably designed as a heat exchanger, is provided in the conditioning unit (2) in at least one partial flow line (7a, 7b) in order to condition the operating medium to the respective conditioning temperature (T1, T2).

4.  Conditioning unit (2) according to claim 3, **characterized in that** at least one heat source supply connection (10a) and at least one heat source return connection (10b) for connecting a heat source are provided on the conditioning unit (2), said heat source connections being fluidically connected to a heat exchanger (9a) arranged in the partial flow line (7a) provided for conditioning the operating medium to the conditioning temperature (T1) that is higher relative to the neutral temperature (T3) in order to form a part of a heat source supply circuit (VK1) **and/or** that at least one heat sink supply connection (11a) and at least one heat sink return connection (11b) for connecting a heat sink are provided on the conditioning unit (2), said heat sink connections are fluidically connected to a heat exchanger (9b) arranged in the partial flow line (7b) provided for conditioning the operating medium to the lower conditioning temperature (T2) compared to the neutral temperature (T3) in order to form a part of a heat sink supply circuit (VK2).

5.  Conditioning unit (2) according to any of claims 1 to 4, **characterized in that** at least one conditioning unit control unit (20) for controlling at least the flow rate of the operating medium in the at least two partial flow lines (7a-7c) is provided in the conditioning unit (2) **and/or in that** the conditioning unit (2) can be connected to a test bench control unit (21) via a test bench interface (S) for controlling at least the flow rate of the operating medium in the at least two partial flow lines (7a-7c).

6.  Conditioning unit (2) according to any of claims 1 to 5, **characterized in that** a pressure control unit (13a, 13b) is provided in the at least one partial flow line (7a, 7b) in which the operating medium can be conditioned to the respective conditioning temperature (T1, T2) **and that** a check valve (14) is provided in the at least one further partial flow line (7c) through which unconditioned operating medium can flow, wherein the at least one pressure control unit (13a, 13b) can be controlled by at least one control unit (20, 21) in order to adjust the flow rate in the at least two partial flow lines (7a-7c).

7.  Conditioning unit (2) according to any of claims 1 to 6, **characterized in that** a first measuring orifice (18) with a differential pressure sensor (18a) for measuring a differential pressure ($\Delta$p1) over the first measuring orifice (18) or a flow measuring unit is provided in the main flow line (6) **and that** a second measuring orifice (19) with a differential pressure sensor (19a) for measuring a differential pressure ($\Delta$p2) over the second measuring orifice (19) or a flow measuring unit is provided in the at least one further partial flow line (7c) through which unconditioned operating medium can flow, wherein the control unit (21, 20) is preferably designed to calculate a setpoint differential pressure ($\Delta$p2_SOLL) in the third partial flow line (7c) as a function of the specified setpoint temperature (T_SOLL) according

$$\Delta p2\_SOLL = \Delta p1 * \frac{(T\_SOLL - T3)}{(Tx - T3)^2}$$

to the relationship with Tx=T1 orT2 and to calculate a control input variable (X_STELL) for the at least one pressure control unit (13a, 13b) from an actual differential pressure ($\Delta$p2_SOLL) measured with the differential pressure sensor (19a) and the setpoint differential pressure ($\Delta$p2_SOLL).

8.  Conditioning unit (2) according to any of claims 1 to 7, **characterized in that** in the main flow line (6) a pump (15) for conveying the operating medium in the conditioning circuit (KK) is provided, which pump is preferably controllable by a control unit (20, 21), wherein a bypass line (16) for the operating medium is preferably provided in the conditioning circuit (KK) for bypassing the pump (15), wherein a controllable valve (17) is provided in the bypass line (16), wherein the controllable valve is preferably controllable by a control unit (20, 21).

9.  Conditioning unit (2) according to any of claims 1 to 8, **characterized in that** a controllable valve unit (34) for distributing the operating medium from the main flow line (6) to the at least two partial flow lines (7a-7c) is provided in the conditioning unit (2), wherein the main flow line (6) is connected via the valve unit (34) to the at least two partial flow lines (7a-7c) **and/or that** a controllable valve unit (34) for mixing the operating medium from the at least two partial flow lines (7a-7c) and supplying to a conditioning unit collecting line (KSL) is provided in the conditioning unit (2), wherein the at least two partial flow lines (7a-7c) are connected to the conditioning unit collecting line (KSL) via the valve unit (34) and the conditioning unit collecting line (KSL) is connected to the at least one mixing unit outlet connection (5).

10. Conditioning unit (2) according to claim 9, **characterized in that** the valve unit (34) has at least one main fluid flow connection (36) for the main fluid flow (HS) and at least one partial fluid flow connection (35a-35c) per part fluid flow (TS), which fluidically communicate via a mixing space (M), wherein a movable mixing element (37) is provided in the mixing space (M) for preferably continuously controlling a distribution ratio or a mixing ratio of the partial fluid flows (TS), which movable mixing element (37) can be driven by a drive unit (38).

11. Conditioning unit (2) according to claim 10, **characterized in that** the mixing element (37) is designed as a rotatable rotor and that the drive unit (38) is designed as an electrically operable actuator to rotate the rotor, wherein the rotor preferably has a hollow cylinder, wherein a control opening (40) is provided on the outer circumferential surface of the hollow cylinder, which control opening connects the outer circumferential surface of the hollow cylinder to the inner circumferential surface, wherein the rotor can be rotated, preferably continuously, in order to bring the control opening (40) into an at least partial correspondence with at least one inlet opening of the partial fluid flow connections (35a-35c) which opens into the mixing space (M), wherein at least one turbulence recess (39) is preferably provided on the outer circumferential surface of the hollow cylinder, which connects the outer circumferential surface of the hollow cylinder to the inner circumferential surface, wherein the turbulence recess (39) is arranged in the axial direction in a section of the hollow cylinder which lies in a region of an opening of the main fluid flow connection (36) in the mixing space (M) and wherein the turbulence recess (39) is preferably designed as an elongated hole.

12. Method for conditioning an operating medium flowing in a test object circuit (PK) of a test object (P) mounted on a test bench to a predefined setpoint temperature (T_SOLL), **characterized in that** a mixing unit (3) is fluidically integrated into the test object circuit (PK) in order to form a part of the test object circuit (PK), wherein operating medium of the test object circuit (PK) to be conditioned is supplied to the mixing unit (3) via at least one test object circuit supply connection (26a) and operating medium conditioned to the predefined setpoint temperature (T_SOLL) is discharged from the mixing unit (3) via at least one test object circuit outlet connection (26b), wherein at least operating medium with a predefined conditioning temperature (T1, T2) and operating medium with a relatively higher or lower neutral temperature (T3) is supplied to the mixing unit (3) via at least one conditioning unit supply connection (27a), which operating medium is mixed in a mixing region (28) provided within the mixing unit (3) with the supplied operating medium of the test object circuit (PK) and is discharged from the mixing unit (3) via at least one conditioning unit return connection (27b), wherein a flow rate of the operating medium with the conditioning temperature (T1, T2) and a flow rate of the operating medium with the neutral temperature (T3) is adjusted as a function of the predefined setpoint temperature (T_SOLL).

13. Method according to claim 12, **characterized in that** at least one actual temperature (T_IST) of the operating medium is determined in the test object circuit (PK) or in the conditioning circuit (KK) and is supplied to a control unit (20, 21), wherein the control unit (20, 21) controls the flow rate of the operating medium with the conditioning temperature (T1, T2) and the flow rate of the operating medium at the neutral temperature (T3) as a function of the determined actual temperature (T_IST) and the predefined setpoint temperature (T_SOLL).

14. Method according to claim 13, **characterized in that** the actual temperature (T_IST) is calculated based on Rich-

$$T\_IST = \frac{(mx * Tx + m3 * T3)}{mx + m3}$$

mann's law of mixtures, preferably according to with a mass flow rate (mx) of the operating medium with the conditioning temperature (T1, T2) and a mass flow rate (m3) of the operating medium with the neutral temperature (T3).

15. Method according to claim 12 or 13, **characterized in that** the operating medium supplied to the mixing unit (3) via the at least one conditioning unit supply connection (27a) flows counter to a flow direction of the test object circuit (PK) to the at least one conditioning unit return connection (27b).

16. Method according to any of claims 12 to 15, **characterized in that** an actual pressure loss (Δp_IST) is measured in the testing object circuit (PK) in the mixing unit (3), and **in that** the flow rate of the operating medium with the conditioning temperature (T1, T2) and the flow rate of the operating medium with the neutral temperature (T3) are fixed in such a way and/or a flow cross section of a throttle point (29) provided in the mixing region (28) is fixed in such a way that the pressure loss (Δp) in the test object circuit (PK) of the mixing unit (3) is adjusted, preferably compensated, to a predefined setpoint pressure loss (Δp_SOLL).

**Revendications**

1. Unité de conditionnement (2) pour un système de conditionnement (1) d'un banc de test pour le conditionnement d'un fluide de service d'un circuit d'éprouvette (PK) d'une éprouvette (P) montée sur le banc de test à une température de consigne (T_SOLL) prédéfinie, **caractérisée en ce qu'au** moins un raccord d'arrivée (4) d'unité de mélange et au moins un raccord de sortie (5, 5a-5c) d'unité de mélange sont prévus sur l'unité de conditionnement (2) pour la liaison de l'unité de conditionnement (2) à une unité de mélange (3) pouvant être intégrée fluidiquement dans le circuit d'éprouvette (PK), l'au moins un raccord d'arrivée (4) d'unité de mélange et l'au moins un raccord de sortie (5, 5a-5c) d'unité de mélange étant reliés fluidiquement à l'intérieur de l'unité de conditionnement (2) afin de former une partie d'un circuit de conditionnement (KK) pour le fluide de service, une conduite d'écoulement principal (6) du circuit de conditionnement (KK), reliée à l'au moins un raccord d'arrivée (4) d'unité de mélange, se divisant dans l'unité de conditionnement (2) en au moins deux conduites d'écoulement partiel (7a-7c), chaque conduite d'écoulement partiel (7a-7c) étant reliée à l'au moins un raccord de sortie (5, 5a-5c) d'unité de mélange, le fluide de service pouvant être conditionné dans une conduite d'écoulement partiel (7a, 7b) à une température de conditionnement (T1, T2) prédéfinie et l'au moins une autre conduite d'écoulement partiel (7c) pouvant être traversée par du fluide de service non conditionné présentant une température neutre (T3) supérieure ou inférieure par rapport à la température de conditionnement (T1, T2), un débit du fluide de service dans les au moins deux conduites d'écoulement partiel (7a-7c) pouvant être réglé en fonction de la température de consigne (T_SOLL) prédéfinie dans le circuit d'éprouvette (PK).

2. Unité de conditionnement (2) selon la revendication 1, **caractérisée en ce que** la conduite d'écoulement principal (6) se divise en au moins trois conduites d'écoulement partiel (7a-7c), chaque conduite d'écoulement partiel (7a-7c) étant reliée à l'au moins un raccord de sortie (5, 5a-5c) d'unité de mélange, le fluide de service pouvant être conditionné dans une première conduite d'écoulement partiel (7a) à une première température de conditionnement (T1), dans une deuxième conduite d'écoulement partiel (7b) à une deuxième température (T2) et une troisième conduite d'écoulement partiel (7c) pouvant être traversée par du fluide de service non conditionné présentant une température neutre (T3) située entre la première et la deuxième température de conditionnement (T1, T2).

3. Unité de conditionnement (2) selon la revendication 1 ou 2, **caractérisée en ce qu'au** moins une unité de mise en température (9a, 9b), de préférence conçue comme un échangeur de chaleur, pour le conditionnement du fluide de service à la température de conditionnement (T1, T2) respective, est prévue dans l'unité de conditionnement (2), dans au moins une conduite d'écoulement partiel (7a, 7b).

4. Unité de conditionnement (2) selon la revendication 3, **caractérisée en ce qu'au** moins un raccord d'arrivée (10a) de source de chaleur et au moins un raccord de retour (10b) de source de chaleur pour le raccordement d'une source de chaleur sont prévus sur l'unité de conditionnement (2) et reliés fluidiquement à un échangeur de chaleur (9a) disposé dans la conduite d'écoulement partiel (7a) prévue pour le conditionnement du fluide de service à la température de conditionnement (T1) supérieure à la température neutre (T3), pour la formation d'une partie d'un circuit d'alimentation (VK1) de source de chaleur et/ou **en ce qu'au** moins un raccord d'arrivée (11a) de dissipateur de chaleur et au moins un raccord de retour (11b) de dissipateur de chaleur pour le raccordement d'un dissipateur de chaleur sont prévus sur l'unité de conditionnement (2) et reliés fluidiquement à un échangeur de chaleur (9b) disposé dans la conduite d'écoulement partiel (7b) prévue pour le conditionnement du fluide de service à la température de conditionnement (T2) inférieure à la température neutre (T3), pour la formation d'une partie d'un circuit d'alimentation (VK2) de dissipateur de chaleur.

5. Unité de conditionnement (2) selon l'une des revendications 1 à 4, **caractérisée en ce qu'au** moins une unité de commande (20) d'unité de conditionnement, destinée à commander au moins le débit du fluide de service dans les au moins deux conduites d'écoulement partiel (7a-7c), est prévue dans l'unité de conditionnement (2) et/ou **en ce que** l'unité de conditionnement (2) peut être reliée à une unité de commande (21) de banc de test par l'intermédiaire d'une interface (S) de banc de test afin de commander au moins le débit du fluide de service dans les au moins deux conduites d'écoulement partiel (7a-7c).

6. Unité de conditionnement (2) selon l'une des revendications 1 à 5, **caractérisée en ce qu'une** unité de régulation de pression (13a, 13b) est prévue dans l'au moins une conduite d'écoulement partiel (7a, 7b) dans laquelle le fluide de service peut être conditionné à la température de conditionnement (T1, T2) respective et **en ce qu'un** clapet antiretour (14) est prévu dans l'au moins une autre conduite d'écoulement partiel (7c), qui peut être traversée par du fluide de service non conditionné, l'au moins une unité de régulation de pression (13a, 13b) pouvant être commandée par au moins une unité de commande (20, 21) afin de régler le débit dans les au moins deux conduites d'écoulement partiel (7a-7c).

7. Unité de conditionnement (2) selon l'une des revendications 1 à 6, **caractérisée en ce qu'**un premier diaphragme de mesure (18) comportant un capteur de pression différentielle (18a) pour la mesure d'une pression différentielle (Δp1) sur le premier diaphragme de mesure (18) ou une unité de mesure de débit est prévu(e) dans la conduite d'écoulement principal (6) et **en ce qu'**un deuxième diaphragme de mesure (19) comportant un capteur de pression différentielle (19a) pour la mesure d'une pression différentielle (Δp2) sur le deuxième diaphragme de mesure (19) ou une unité de mesure de débit est prévu(e) dans l'au moins une autre conduite d'écoulement partiel (7c), qui peut être traversée par du fluide de service non conditionné, l'unité de commande (21, 20) étant de préférence conçue pour calculer une pression différentielle de consigne (Δp2_SOLL) dans la troisième conduite d'écoulement partiel (7c) en fonction de la température de consigne (T_SOLL) prédéfinie selon la relation

$$\Delta p2\_SOLL = \Delta p1 * \frac{(T\_SOLL - T3)}{(Tx - T3)^2}$$

dans laquelle Tx=T1 ou T2 et pour calculer une grandeur de réglage (X_STELL) pour l'au moins une unité de régulation de pression (13a, 13b) à partir d'une pression différentielle réelle (Δp2_SOLL) mesurée à l'aide du capteur de pression différentielle (19a) et de la pression différentielle de consigne (Δp2_SOLL).

8. Unité de conditionnement (2) selon l'une des revendications 1 à 7, **caractérisée en ce qu'**une pompe (15) pour le refoulement du fluide de service dans le circuit de conditionnement (KK) est prévue dans la conduite d'écoulement principal (6), laquelle pompe peut de préférence être commandée par une unité de commande (20, 21), une conduite de dérivation (16) pour le fluide de service étant de préférence prévue dans le circuit de conditionnement (KK) afin de court-circuiter la pompe (15), une vanne (17) pouvant être commandée étant prévue dans la conduite de dérivation (16), la vanne pouvant être commandée pouvant de préférence être commandée par une unité de commande (20, 21).

9. Unité de conditionnement (2) selon l'une des revendications 1 à 8, **caractérisée en ce qu'**une unité de vanne (34) pouvant être commandée, destinée à répartir le fluide de service provenant de la conduite d'écoulement principal (6) sur les au moins deux conduites d'écoulement partiel (7a-7c), est prévue dans l'unité de conditionnement (2), la conduite d'écoulement principal (6) étant reliée aux au moins deux conduites d'écoulement partiel (7a-7c) par l'intermédiaire de l'unité de vanne (34) et/ou **en ce qu'**une unité de vanne (34) pouvant être commandée, destinée à mélanger le fluide de service provenant des au moins deux conduites d'écoulement partiel (7a-7c) et l'amener à une conduite collectrice (KSL) d'unité de conditionnement, est prévue dans l'unité de conditionnement (2), les au moins deux conduites d'écoulement partiel (7a-7c) étant reliées à la conduite collectrice (KSL) d'unité de conditionnement par l'intermédiaire de l'unité de vanne (34) et la conduite collectrice (KSL) d'unité de conditionnement étant reliée à l'au moins un raccord de sortie (5) d'unité de mélange.

10. Unité de conditionnement (2) selon la revendication 9, **caractérisée en ce que** l'unité de vanne (34) présente au moins un raccord (36) d'écoulement principal de fluide pour l'écoulement principal de fluide (HS) et au moins un raccord (35a-35c) d'écoulement partiel de fluide par écoulement partiel de fluide (TS), qui communiquent fluidiquement par l'intermédiaire d'un espace de mélange (M), un élément de mélange mobile (37) étant prévu dans l'espace de mélange (M) pour la commande de préférence en continu d'un rapport de répartition ou d'un rapport de mélange des écoulement partiels de fluide (TS), lequel élément peut être entraîné par une unité d'entraînement (38).

11. Unité de conditionnement (2) selon la revendication 10, **caractérisée en ce que** l'élément de mélange (37) est conçu sous forme de rotor rotatif et **en ce que** l'unité d'entraînement (38) pour la rotation du rotor est conçue sous forme d'actionneur à commande électrique, le rotor présentant de préférence un cylindre creux, une ouverture de commande (40) étant prévue sur la surface périphérique extérieure du cylindre creux, laquelle ouverture relie la surface périphérique extérieure du cylindre creux à la surface périphérique intérieure, le rotor pouvant être tourné, de préférence en continu, pour amener l'ouverture de commande (40) en correspondance au moins partielle avec respectivement au moins une embouchure d'arrivée des raccords d'écoulement partiel de fluide (35a-35c) débouchant dans l'espace de mélange (M), au moins un évidement de tourbillonnement (39) étant prévu de manière particulièrement préférée sur la surface périphérique extérieure du cylindre creux, lequel évidement relie la surface périphérique extérieure du cylindre creux à la surface périphérique intérieure, l'évidement de tourbillonnement (39) étant disposé dans la direction axiale dans une section du cylindre creux qui se trouve dans une zone d'une embouchure du raccord d'écoulement principal de fluide (36) dans l'espace de mélange (M) et l'évidement de tourbillonnement (39) étant de préférence conçu sous forme de trou oblong.

**12.** Procédé de conditionnement d'un fluide de service s'écoulant dans un circuit d'éprouvette (PK) d'une éprouvette (P) montée sur un banc de test à une température de consigne (T_SOLL) prédéfinie, **caractérisé en ce qu'**une unité de mélange (3) est intégrée fluidiquement dans le circuit d'éprouvette (PK) afin de former une partie du circuit d'éprouvette (PK), le fluide de service à conditionner du circuit d'éprouvette (PK) étant amené à l'unité de mélange (3) par l'intermédiaire d'au moins un raccord d'arrivée (26a) de circuit d'éprouvette et du fluide de service conditionné à la température de consigne (T_SOLL) prédéfinie étant évacué de l'unité de mélange (3) par l'intermédiaire d'au moins un raccord de sortie (26b) de circuit d'éprouvette, l'unité de mélange (3) étant alimentée, par l'intermédiaire d'au moins un raccord d'arrivée (27a) d'unité de conditionnement, au moins en fluide de service présentant une température de conditionnement (T1, T2) prédéfinie et en fluide de service présentant une température neutre (T3) supérieure ou inférieure par rapport à celle-ci, qui est mélangé, dans une zone de mélange (28) prévue à l'intérieur de l'unité de mélange (3), avec le fluide de service amené du circuit d'éprouvette (PK) et qui est évacué de l'unité de mélange (3) par l'intermédiaire d'au moins un raccord de retour (27b) d'unité de conditionnement, un débit du fluide de service à la température de conditionnement (T1, T2) et un débit du fluide de service à la température neutre (T3) étant réglés en fonction de la température de consigne (T_SOLL) prédéfinie.

**13.** Procédé selon la revendication 12, **caractérisé en ce qu'**au moins une température réelle (T _IST) du fluide de service est déterminée dans le circuit d'éprouvette (PK) ou dans le circuit de conditionnement (KK) et est amenée à une unité de commande (20, 21), l'unité de commande (20, 21) commandant, en fonction de la température réelle (T_IST) déterminée et de la température de consigne (T_SOLL) prédéfinie, le débit du fluide de service à la température de conditionnement (T1, T2) et le débit du fluide de service à la température neutre (T3).

**14.** Procédé selon la revendication 13, **caractérisé en ce que** la température réelle (T_IST) est calculée sur la base

$$T\_IST = \frac{(mx * Tx + m3 * T3)}{mx + m3}$$

de la règle de mélange de Richmann, de préférence selon à un débit massique (mx) du fluide de service à la température de conditionnement (T1, T2) et à un débit massique (m3) du fluide de service à la température neutre (T3).

**15.** Procédé selon la revendication 12 ou 13, **caractérisé en ce que** le fluide de service amené à l'unité de mélange (3) par l'intermédiaire de l'au moins un raccord d'arrivée (27a) d'unité de conditionnement s'écoule vers au moins un raccord de retour (27b) d'unité de conditionnement en sens inverse d'une direction d'écoulement du circuit d'éprouvette (PK).

**16.** Procédé selon l'une des revendications 12 à 15, **caractérisé en ce qu'**une perte de pression réelle (Δp_IST) est détectée dans le circuit d'éprouvette (PK) dans l'unité de mélange (3) et **en ce que** le débit du fluide de service à la température de conditionnement (T1, T2) et le débit du fluide de service à la température neutre (T3) sont fixés de telle sorte et/ou une section transversale d'écoulement d'un point d'étranglement (29) prévu dans la zone de mélange (28) est fixée de telle sorte que la perte de pression (Δp) dans le circuit d'éprouvette (PK) de l'unité de mélange (3) est réglée, de préférence compensée, à une perte de pression de consigne (Δp_SOLL) prédéfinie.

Fig. 1a

Fig. 1b

Fig. 2

Fig. 3

Fig. 4

EP 4 226 231 B1

Fig. 6

Fig. 7

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2019183658 A1
- WO 2019149792 A1
- EP 3293504 A1
- DE 102009013449 A1
- US 2019091641 A1